# EUROPÄISCHE PATENTSCHRIFT

(11) **EP 3 504 046 B1**
(45) Veröffentlichungstag und Bekanntmachung des Hinweises auf die Patenterteilung: **12.08.2020**
(21) Anmeldenummer: 17757523.0
(22) Anmeldetag: 22.08.2017
(51) Int. Cl.: B29C 65/00, B32B 3/26, B32B 5/24, B29C 65/02, B29C 65/48, B29K 105/04

(54) **FASERVERSTÄRKTER SCHAUMSTOFF**
FIBER REINFORCED FOAM
MOUSSE RENFORCEE PAR DES FIBRES

(30) Priorität: 26.08.2016 EP 16185829
(43) Veröffentlichungstag der Anmeldung: 03.07.2019
(73) Patentinhaber: BASF SE, 67056 Ludwigshafen (DE)
(72) Erfinder: DAUN, Gregor, 67056 Ludwigshafen (DE); KIRGIS, Andreas, 67056 Ludwigshafen (DE); RUCKDAESCHEL, Holger, 67056 Ludwigshafen (DE); ARBTER, Rene, 67056 Ludwigshafen (DE); STEIN, Robert, 67056 Ludwigshafen (DE); MORINO, Alessio, 10088 Volpiano (IT)
(74) Vertreter: BASF IP Association
(86) Internationale Anmeldenummer: PCT/EP2017/071155
(87) Internationale Veröffentlichungsnummer: WO 2018/037016

(56) Entgegenhaltungen:
- EP-A1- 2 153 982
- WO-A1-2012/123551
- GB-A- 2 188 281
- GB-A- 2 225 282
- US-A- 3 902 943

## Beschreibung

Die vorliegende Erfindung betrifft ein Verfahren zur Herstellung eines Faser/Schaum-Verbundwerkstoffs (FSV1), bei dem auf einen ersten Schaumstoffkörper (SK1) ein erstes Fasermaterial (FM1) aufgebracht wird unter Erhalt eines Zwischenprodukts (ZP) mit einer ersten strukturierten Faseroberfläche (F01), auf die anschließend ein zweiter Schaumstoffkörper (SK2) aufgebracht wird, unter Erhalt des Faser/Schaum-Verbundwerkstoffs (FSV1).

Verstärkte Schaumstoffe sind industriell von besonderer Bedeutung, da sie eine hohe Festigkeit und Steifigkeit aufweisen bei gleichzeitig geringem Gewicht. Daher sind verstärkte Schaumstoffe insbesondere interessant für Bauteile, die möglichst leicht und trotzdem mechanisch äußerst stabil sein sollen. So werden verstärkte Schaumstoffe, beispielsweise für Bauteile von Booten und Schiffen sowie Autos verwendet. Sie werden außerdem als Kern von Rotorblättern in Windturbinen eingesetzt. Verstärkte Schaumstoffe sollen für den Einsatz in derartigen Bauelementen möglichst in drei Raumrichtungen gute mechanische Eigenschaften, insbesondere eine hohe Schubsteifigkeit, aufweisen.

Ein Schaumstoff kann beispielsweise durch ein Fasermaterial verstärkt werden, wodurch ein Faser/Schaum-Verbundwerkstoff erhalten wird. Im Stand der Technik sind hierzu verschiedene Verfahren beschrieben.

GB 2 225 282 A beschreibt einen Faser/Schaum-Verbundwerkstoff, der Hartschaumschichten enthält, zwischen die eine Verstärkungsschicht aus einer Faser eingebracht wird. Die Hartschaumschichten bestehen beispielsweise aus Polyetherimidschaum, die Verstärkungsschicht aus Karbonfaser oder Glasfaser. Die Hartschaumschichten werden mit den Verstärkungsschichten beispielsweise durch Verschweißung oder Verklebung verbunden. Die GB 2 225 282 A beschreibt außerdem die Möglichkeit, die erhaltenen Faser/Schaum-Verbundwerkstoffe im Anschluss an ihre Herstellung zu scheiden und neu zu verkleben. Sämtliche beschriebenen Faser/Schaum-Verbundwerkstoffe werden aus Hartschaumstoffplatten hergestellt, die planare Oberflächen aufweisen. Es handelt sich also lediglich um eindimensionale Verstärkungen. Diese Art der Verstärkung ist als nachteilig anzusehen, da die Faser/Schaum-Verbundwerkstoffe nicht in allen drei Raumrichtungen gute mechanische Eigenschaften aufweisen, sondern lediglich in der Raumrichtung, in der die Verstärkungsschichten eingebracht sind.

Die US 5,866,051 beschreibt ein Verfahren zur Herstellung von Faser/Schaum-Verbundwerkstoffen, bei dem ein schäumbares Polymer über eine Düse extrudiert und gleichzeitig ein Fasermaterial in Extrusionsrichtung gezogen wird. Dadurch wird das Fasermaterial in den Schaumstoff eingebracht. Gemäß US 5,866,051 ist es außerdem möglich, das Fasermaterial auf den Schaumstoff aufzubringen. Mit dem in US 5,866,051 beschriebenen Verfahren können ebenfalls nur planare Verstärkungsschichten in den Schaumstoff eingebracht werden. Eine optimale Verstärkung in drei Raumrichtungen ist daher nicht möglich.

Die WO 2005/018 926 beschreibt verschiedene Faser/Schaum-Verbundwerkstoffe, bei denen ein Fasermaterial in einen Schaumstoff eingebracht ist. Die Schaumstoffe werden zur Herstellung des Faser/Schaum-Verbundwerkstoffs über planare Flächen miteinander und mit dem Fasermaterial verbunden. Die WO 2005/018 926 beschreibt auch die Möglichkeit, trigonal prismatisch geformte Schaumstoffkörper über ihre planaren Flächen miteinander zu verbinden, wodurch eine dreidimensionale Verstärkung erzielt wird. Nachteilig ist dabei allerdings, dass zunächst die trigonal prismatisch geformten Schaumstoffkörper hergestellt und mit dem Fasermaterial umwickelt werden müssen und anschließend erst miteinander verbunden werden können. Es sind also mindestens drei Verfahrensschritte (Herstellung der trigonal prismatisch geformten Schaumstoffkörper, Umwickeln der Schaumstoffkörper, Verbinden der Schaumstoffkörper) nötig, was das Verfahren gemäß WO 2005/018 926 äußerst zeit- und kostenaufwändig macht.

Die GB 2 188 281 betrifft einen Faserschaumverbundwerkstoff aus Schichten von einem Schaumstoff, die über eine Matte miteinander verbunden sind, wobei diese Matte nicht planar ist. Als Matte wird beispielsweise Glasfaser eingesetzt. Zur Herstellung wird zunächst ein Schaumstoff mit planaren Flächen extrudiert und dann mehrere Elemente dieses Schaumstoffs nebeneinander gelegt, sodass sie eine nicht planare Schicht bilden. Anschließend wird die getränkte Matte auf diese nicht planare Schicht gelegt und schließlich eine weitere Schicht von extrudiertem Schaumstoff daraufgelegt. Das in GB 2 188 281 beschriebene Verfahren ist sehr aufwändig, zudem ist das Handling der getränkten Matten problematisch.

Die WO 2012/123551 beschreibt ein Verfahren zum Verschweißen von Schaumstoffblöcken mit wellig geformten Heizelementen.

Die EP 2 153 982 beschreibt einen Schaumstoffkörper mit Schweißnähten, die durch Ausnehmungen unterbrochen sind. Zur Herstellung werden Oberflächen von Schaumstoffelementen mit einem Heizschwert mit strukturierter Oberfläche erwärmt oder die Schaumstoffkörper weisen Oberflächen mit nutenförmigen Vertiefungen auf.

Die US 3,902,943 beschreibt das Verschweißen von thermoplastischen Schaumstoffplatten mit einem gewellten Heizschwert.

Nachteilig bei den in WO 2012/123551, EP 2 153 982 und US 3,902,943 beschriebenen verschweißten Schaumstoffen ist, dass sie häufig unzureichende mechanische Stabilitäten, insbesondere zur Anwendung in Bauteilen, die Leichtigkeit in Kombination mit hoher Festigkeit und Steifigkeit erfordern, aufweisen.
Der vorliegenden Erfindung liegt somit die Aufgabe zugrunde, ein Verfahren zur Herstellung eines Faser/Schaum-Verbundwerkstoffes bereitzustellen, das die vorstehend genannten Nachteile der Verfahren des Standes der Technik nicht oder in vermindertem Maße aufweist.

Gelöst wird diese Aufgabe durch ein Verfahren zur Herstellung eines Faser/Schaum-Verbundwerkstoffs (FSV1), umfassend die folgenden Schritte:
a) Bereitstellen eines ersten Schaumstoffkörpers (SK1), der eine erste strukturierte Oberfläche (OS1) aufweist,
b) Bereitstellen eines ersten Fasermaterials (FM1),
c) Aufbringen des ersten Fasermaterials (FM1) auf zumindest einen Teil der ersten strukturierten Oberflächen (OS1), des ersten Schaumstoffkörpers (SK1) unter Erhalt eines Zwischenproduktes (ZP) mit einer ersten strukturierten Faseroberfläche (F01), die dasselbe Profil wie die erste strukturierte Oberfläche (OS1) aufweist,
d) Bereitstellen eines zweiten Schaumstoffkörpers (SK2), der eine zweite strukturierte Oberfläche (OS2) aufweist, deren Profil zu dem Profil der ersten strukturierten Faseroberfläche (FO1) des Zwischenproduktes (ZP) invers ist und
e) Aufbringen der zweiten strukturierten Oberfläche (OS2) des zweiten Schaumstoffkörpers (SK2) auf zumindest einen Teil der ersten strukturierten Faseroberfläche (FO1) des Zwischenproduktes (ZP) unter Erhalt des Faser/Schaum-Verbundwerkstoffs (FSV1), in dem die erste strukturierte Faseroberfläche (FO1) des Zwischenproduktes (ZP) und die zweite strukturierte Oberfläche (OS2) des zweiten Schaumstoffkörpers (SK2) miteinander verbunden sind.

Das erfindungsgemäße Verfahren ermöglicht eine kostengünstigere und einfachere Herstellung von Faser/Schaum-Verbundwerkstoffen (FSV1) als Verfahren, die im Stand der Technik beschrieben sind. Besonders vorteilhaft bei dem erfindungsgemäßen Verfahren ist, dass in einer bevorzugten Ausführungsform der erste Schaumstoffkörper (SK1), der eine erste strukturierte Oberfläche (OS1) aufweist, bereitgestellt wird durch Extrusion, Thermoformung und/oder Drahtschneiden und dass dadurch Materialverlust vermieden wird, der häufig in den im Stand der Technik beschriebenen Verfahren auftritt, da dort die Schaumstoffkörper in der Regel spanend bearbeitet werden, um geeignet geformte Schaumstoffkörper herzustellen.

Da im erfindungsgemäßen Verfahren bereits eine gute dreidimensionale Verstärkung des Schaumstoffs dadurch erzielt wird, dass der Faser/Schaum-Verbundwerkstoff durch das erfindungsgemäße Verfahren hergestellt wird, können zusätzliche Verfahrensschritte zur Verbesserung der mechanischen Stabilisierung vermieden werden. Darüber hinaus kann ein Schneiden der Faser im Schaumstoff vermieden werden, da ein Schneiden und anschließendes Verkleben, wie es in Verfahren, die im Stand der Technik beschrieben sind, häufig notwendig ist, nicht zwangsläufig erforderlich ist, um eine ausreichende mechanische Stabilität zu erzielen.

Da die Schaumstoffkörper, aus denen der Faser/Schaum-Verbundwerkstoff (FSV1) hergestellt wird, bevorzugt nicht spanend bearbeitet werden, weisen sie in der Regel geschlossene Oberflächen auf. Dies ist vorteilhaft bei der Weiterverarbeitung der Faser/Schaum-Verbundwerkstoffe (FSV1), beispielsweise zu Paneelen. Bei der Herstellung von Paneelen wird mindestens eine Harzschicht auf den Faser/Schaum-Verbundwerkstoff (FSV1) aufgebracht. Wenn die Oberflächen der Schaumstoffkörper geschlossen sind, nehmen die Schaumstoffkörper weniger Harz auf. Daher sind Paneele, die aus den erfindungsgemäßen Faser/Schaum-Verbundwerkstoffen (FSV1) hergestellt werden, deutlich leichter.

Nachfolgend wird das erfindungsgemäße Verfahren näher beschrieben.

Erfindungsgemäß wird in Schritt a) ein erster Schaumstoffkörper (SK1), der eine erste strukturierte Oberfläche (OS1) aufweist, bereitgestellt.

Unter "ein erster Schaumstoffkörper (SK1)" wird im Rahmen der vorliegenden Erfindung sowohl genau ein erster Schaumstoffkörper (SK1) als auch zwei oder mehrere erste Schaumstoffkörper (SK1) verstanden. Bevorzugt ist genau ein Schaumstoffkörper (SK1).

Unter "eine erste strukturierte Oberfläche (OS1)" wird im Rahmen der vorliegenden Erfindung sowohl genau eine erste strukturierte Oberfläche (OS1) verstanden, als auch zwei oder mehrere erste strukturierte Oberflächen (OS1).

Die Bereitstellung des ersten Schaumstoffkörpers (SK1) kann nach allen dem Fachmann bekannten Methoden erfolgen.

Bevorzugt wird im erfindungsgemäßen Verfahren der erste Schaumstoffkörper (SK1) in Schritt a) bereitgestellt durch Extrusion, Thermoformung und/oder Drahtschneiden. Besonders bevorzugt durch Extrusion.

Selbstverständlich können diese Verfahren auch miteinander kombiniert werden.

Die Verfahren sind dem Fachmann als solche bekannt.

Bei der Extrusion wird üblicherweise ein schäumbares Polymer aus einem Extruder, der eine formgebende Öffnung umfasst, extrudiert und schäumt bei Austritt aus der formgebenden Öffnung auf unter Erhalt des ersten Schaumstoffkörpers (SK1). Gegebenenfalls kann der so erhaltene erste Schaumstoffkörper (SK1) zusätzlich durch ein Kalibrierwerkzeug wie beispielsweise Kalander geformt werden.

Beim Thermoformen, welches auch als Tiefziehen oder Vakuumtiefziehen bezeichnet wird, wird ein Polymer üblicherweise in Form einer Folie oder einer Platte erwärmt, mit einem formgebenden Werkzeug Strukturierungen eingebracht und so der erste Schaumstoffkörper (SK1) erhalten.

Beim Drahtschneiden, auch als Drahterodieren bezeichnet, wird ein Block eines Polymers mit einem heißen Draht geschnitten und so der erste Schaumstoffkörper (SK1) erhalten.

Der in Schritt a) bereitgestellte erste Schaumstoffkörper (SK1) enthält bevorzugt ein thermoplastisches Polymer. Insbesondere bevorzugt enthält im erfindungsgemäßen Verfahren der in Schritt a) bereitgestellte erste Schaumstoffkörper (SK1) ein thermoplastisches Polymer, ausgewählt aus der Gruppe bestehend aus thermoplastischen Elastomeren, thermoplastischen Elastomeren mit Copolymerstruktur, Polyetheramiden, Polyetherestern, Polyurethanen, Styrolpolymeren, Polyacrylaten, Polycarbonaten, Polyestern, Polyethern, Polyamiden, Polyethersulfonen, Polyetherketonen, Polyimiden, Polyvinylchloriden, Polyolefinen, Polyacrylnitrilen, Polyethersulfiden, deren Copolymere und Mischungen daraus. Die Größe des ersten Schaumstoffkörpers (SK1) kann beliebig sein.

Der erste Schaumstoffkörper (SK1) weist erfindungsgemäß eine erste strukturierte Oberfläche (OS1) auf.

Unter einer "strukturierten Oberfläche" wird im Rahmen der vorliegenden Erfindung eine Oberfläche verstanden, die Vertiefungen aufweist. Die Vertiefungen sind bevorzugt regelmäßig angeordnet. Dies bedeutet, dass der Abstand zwischen zwei direkt benachbarten Vertiefungen über die gesamte strukturierte Oberfläche bevorzugt im Wesentlichen gleich ist. Bevorzugt weist also jede Vertiefung zu der nächsten benachbarten Vertiefung den gleichen Abstand auf.

Die Vertiefungen werden im Rahmen der vorliegenden Erfindung auch als Strukturierungen, Strukturen, Muster oder Strukturierungsmuster bezeichnet. Im Rahmen der vorliegenden Erfindung können die Vertiefungen außerdem auch als Profil bezeichnet werden.

Die erste strukturierte Oberfläche (OS1) weist bevorzugt regelmäßige Strukturierungen auf.

Das Profil der ersten strukturierten Oberfläche (OS1) in Schritt a) kann beliebige Formen aufweisen. Bevorzugt ist das Profil der ersten strukturierten Oberfläche (OS1) in Schritt a) wellenförmig, zickzackförmig, karoförmig, rautenförmig, rechteckförmig, quadratförmig, punktförmig und/oder gitterförmig.

Es versteht sich von selbst, dass sich das Profil bzw. die Strukturierung auf die Formen der Vertiefungen in der ersten strukturierten Oberfläche (OS1) bezieht, wenn von oben auf die erste strukturierte Oberfläche (OS1) geblickt wird. Im Querschnitt des ersten Schaumstoffkörpers (SK1) kann die Form der Strukturierung der ersten strukturierten Oberfläche (OS1) über die Länge des ersten Schaumstoffkörpers (SK1) variieren oder von den vorgenannten Formen abweichen. Beispielsweise kann der Querschnitt der Strukturierung der ersten strukturierten Oberfläche (OS1) wellenförmig, zickzackförmig und/oder zinnenförmig sein.

Die erste strukturierte Oberfläche (OS1) kann nach allen dem Fachmann bekannten Methoden in den ersten Schaumstoffkörper (SK1) aufgebracht werden. Beispielsweise kann die erste strukturierte Oberfläche (OS1) bereits beim Herstellungsverfahren des ersten Schaumstoffkörpers (SK1) aufgebracht werden. Darüber hinaus ist es möglich, dass die erste strukturierte Oberfläche (OS1) nach der Bereitstellung des ersten Schaumstoffkörpers (SK1) beispielsweise durch ein Formwerkzeug eingebracht wird.

Bezogen auf ein rechtwinkliges Koordinatensystem wird die Richtung, die senkrecht zu der Ausgleichsebene der ersten strukturierten Oberfläche (OS1) liegt, als z-Richtung bezeichnet. Die z-Richtung wird im Rahmen der vorliegenden Erfindung auch als Dicke des ersten Schaumstoffkörpers (SK1) bezeichnet. die beiden dazu senkrecht stehenden Richtungen sind die die x- und die y-Richtung. Die x-Richtung wird auch als Länge des ersten Schaumstoffkörpers (SK1) bezeichnet, die y-Richtung als Breite des ersten Schaumstoffkörpers (SK1).

Vorzugsweise weist der erste Schaumstoffkörper (SK1) zusätzlich eine dritte strukturierte Oberfläche (OS3) auf.

"Eine dritte strukturierte Oberfläche (OS3)" bedeutet im Rahmen der vorliegenden Erfindung sowohl genau eine dritte strukturierte Oberfläche (OS3) als auch zwei oder mehrere dritte strukturierte Oberflächen (OS3).

Für die dritte strukturierte Oberfläche (OS3) gelten die zuvor beschriebenen Ausführungen und Bevorzugungen für die erste strukturierte Oberfläche (OS1) entsprechend.

Es ist daher bevorzugt, dass das Profil der dritten strukturierten Oberfläche (OS3), die der erste Schaumstoffkörper (SK1) gegebenenfalls aufweist, wellenförmig, zickzackförmig, karoförmig, rautenförmig, rechteckförmig, quadratförmig, punktförmig und/oder gitterförmig ist.

Das Profil der dritten strukturierten Oberfläche (OS3) kann gleich oder verschieden von dem Profil der ersten strukturierten Oberfläche (OS1) sein. Bevorzugt ist das Profil der dritten strukturierten Oberfläche (OS3) gleich dem Profil der ersten strukturierten Oberfläche (OS1).

Es ist im erfindungsgemäßen Verfahren außerdem bevorzugt, dass der erste Schaumstoffkörper (SK1) die dritte strukturierte Oberfläche (OS3) aufweist, wobei die dritte strukturierte Oberfläche (OS3) der ersten strukturierten Oberfläche (OS1) gegenüberliegt.

Unter "gegenüberliegt" wird räumlich gegenüber verstanden.

Es ist also bevorzugt, dass im erfindungsgemäßen Verfahren der erste Schaumstoffkörper (SK1) eine dritte strukturierte Oberfläche (OS3) aufweist, wobei die dritte strukturierte Oberfläche (OS3) gegenüber der ersten strukturierten Oberfläche (OS1) angeordnet ist.

Es ist außerdem bevorzugt, dass, wenn der erste Schaumstoffkörper (SK1) eine dritte strukturierte Oberfläche (OS3) aufweist, die erste strukturierte Oberfläche (OS1) und die dritte strukturierte Oberfläche (OS3) im Wesentlichen parallel zueinander ausgerichtet sind.

Unter "im Wesentlichen parallel" wird im Rahmen der vorliegenden Erfindung verstanden, dass, wenn eine erste Ausgleichsebene durch die erste strukturierte Oberfläche (OS1) und eine zweite Ausgleichsebene durch die dritte strukturierte Oberfläche (OS3) gelegt werden, diese beiden Ausgleichsebenen einen Winkel von maximal ± 45 °, bevorzugt von maximal ± 30 °, mehr bevorzugt von maximal ± 10 ° und am meisten bevorzugt von maximal ± 2 ° zueinander aufweisen.

In Schritt b) wird ein erstes Fasermaterial (FM1) bereitgestellt.

Unter "ein erstes Fasermaterial (FM1)" wird im Rahmen der vorliegenden Erfindung sowohl genau ein erstes Fasermaterial (FM1) verstanden, als auch zwei oder mehrere erste Fasermaterialien (FM1).

Als erstes Fasermaterial (FM1), das in Schritt b) bereitgestellt wird, eignen sich prinzipiell alle dem Fachmann bekannten Fasermaterialien. Beispielsweise ist das in Schritt b) bereitgestellte erste Fasermaterial (FM1) ausgewählt aus der Gruppe bestehend aus anorganischen Mineralfasern, organischen Fasern, natürlichen Polymeren, natürlichen organischen Fasern pflanzlichen oder tierischen Ursprungs, Kohlenstofffasern oder Mischungen daraus.

Geeignete anorganische Mineralfasern sind dem Fachmann bekannt. Bevorzugt sind anorganische Mineralfasern ausgewählt aus der Gruppe bestehend aus Glasfasern, Basaltfasern, Metallfasern, Keramikfasern und Nanotubefasern.

Geeignete organische Fasern sind dem Fachmann ebenfalls bekannt. Bevorzugt sind organische Fasern, ausgewählt aus der Gruppe bestehend aus Polykondensationsfasern und Polyadditionsfasern.

Geeignete natürliche Polymere sind dem Fachmann ebenfalls bekannt. Bevorzugt sind natürliche Polymere, ausgewählt aus der Gruppe bestehend aus zellulosebasierten Fasern, Gummifasern, stärkebasierten Fasern und glukosebasierten Fasern.

Vorzugsweise ist das in Schritt b) bereitgestellte erste Fasermaterial (FM1) daher ausgewählt aus der Gruppe bestehend aus Glasfasern, Basaltfasern, Metallfasern, Keramikfasern, Nanotubefasern, Polykondensationsfasern, Polyadditionsfasern, zellulosebasierten Fasern, Gummifasern, stärkebasierten Fasern, glukosebasierten Fasern und Mischungen daraus.

Das erste Fasermaterial (FM1) kann in Schritt b) in allen dem Fachmann bekannten Formen bereitgestellt werden. Bevorzugt wird das erste Fasermaterial (FM1) als Gewebe, Gelege, Geflecht, Vlies, Organosheet, Kardenband und/oder Roving bereitgestellt.

Das in Schritt b) bereitgestellte erste Fasermaterial (FM1) kann darüber hinaus eine Schlichte enthalten. Des Weiteren ist es möglich, dass das in Schritt b) bereitgestellte erste Fasermaterial (FM1) ein Matrixmaterial, ein Bindemittel, thermoplastische Fasern, Pulver und/oder Partikel enthält.

Es ist erfindungsgemäß bevorzugt, dass das in Schritt b) bereitgestellte erste Fasermaterial (FM1) trocken ist. Bevorzugt wird das erste Fasermaterial (FM1) in Schritt b) also trocken bereitgestellt.

"Trocken" bedeutet im Rahmen der vorliegenden Erfindung, dass das erste Fasermaterial (FM1) nicht imprägniert ist. Insbesondere enthält das erste Fasermaterial (FM1) dann keine Komponente, die ausgehärtet wird, wie beispielsweise ein Harz.

In dieser Ausführungsform ist es erfindungsgemäß außerdem bevorzugt, dass das erste Fasermaterial (FM1) beim Aufbringen in Schritt c) ebenfalls trocken ist. Bevorzugt wird dann also das erste Fasermaterial (FM1) in Schritt c) trocken auf zumindest einen Teil der ersten strukturierten Oberfläche (OS1) des ersten Schaumkörpers (SK1) aufgebracht.

Erfindungsgemäß bevorzugt ist daher also ein Verfahren, bei dem
I) das in Schritt b) bereitgestellte erste Fasermaterial (FM1) ausgewählt ist aus der Gruppe bestehend aus anorganischen Mineralfasern, organischen Fasern, natürlichen Polymeren, natürlichen organischen Fasern pflanzlichen oder tierischen Ursprungs, Kohlenstofffasern und Mischungen daraus, vorzugsweise ausgewählt aus der Gruppe bestehend aus Glasfasern, Basaltfasern, Metallfasern, Keramikfasern, Nanotubefasern, Polykondensationsfasern, Polyadditionsfasern, zellulosebasierten Fasern, Gummifasern, stärkebasierten Fasern, glukosebasierten Fasern und Mischungen daraus, und/oder
II) in Schritt b) das erste Fasermaterial (FM1) als Gewebe, Gelege, Geflecht, Vlies, Organosheet, Kardenband und/oder Roving bereitgestellt wird, und/oder
III) das in Schritt b) bereitgestellte erste Fasermaterial (FM1) eine Schlichte enthält, und/oder
IV) das in Schritt b) bereitgestellte erste Fasermaterial (FM1) ein Matrixmaterial, ein Bindemittel, thermoplastische Fasern, Pulver und/oder Partikel enthält.

Es ist außerdem bevorzugt, dass das erste Fasermaterial (FM1) in Schritt b) auf Rollen bereitgestellt wird.

In Schritt c) wird das erste Fasermaterial (FM1) auf zumindest einen Teil der ersten strukturierten Oberfläche (OS1) des ersten Schaumstoffkörpers (SK1) unter Erhalt eines Zwischenprodukts (ZP) mit einer ersten strukturierten Faseroberfläche (F01), die dasselbe Profil wie die erste strukturierte Oberfläche (OS1) aufweist, aufgebracht.

"Auf zumindest einen Teil der ersten strukturierten Oberfläche (OS1)" bedeutet im Rahmen der vorliegenden Erfindung, dass das erste Fasermaterial (FM1) bevorzugt auf 20 bis 100 % der ersten strukturierten Oberfläche (OS1), bevorzugt auf 50 bis 100 % der ersten strukturierten Oberfläche (OS1) und insbesondere bevorzugt auf 90 bis 100 % der ersten strukturierten Oberfläche (OS1), jeweils bezogen auf die gesamte erste strukturierte Oberfläche (OS1), aufgebracht wird.

Besonders bevorzugt wird das erste Fasermaterial (FM1) in Schritt c) auf die gesamte erste strukturierte Oberfläche (OS1) des ersten Schaumstoffkörpers (SK1) aufgebracht.

Insbesondere bevorzugt weist das erste Fasermaterial (FM1), das in Schritt c) aufgebracht wird, die gleiche Größe wie die Oberfläche der ersten strukturierten Oberfläche (OS1) auf.

Es ist in einer weiteren Ausführungsform insbesondere bevorzugt, dass das erste Fasermaterial (FM1), das in Schritt c) aufgebracht wird, mindestens die gleiche Größe wie die Oberfläche der ersten strukturierten Oberfläche (OS1) aufweist.

Im Rahmen der vorliegenden Erfindung wird unter der "Größe der Oberfläche der ersten strukturierten Oberfläche (OS1)" die gesamte Oberfläche der ersten strukturierten Oberfläche (OS1) verstanden. Es versteht sich von selbst, dass die Oberfläche der ersten strukturierten Oberfläche (OS1) üblicherweise größer ist als das Produkt aus der Breite und der Länge des ersten Schaumstoffkörpers (SK1).

Wenn das erste Fasermaterial (FM1) auf die erste strukturierte Oberfläche (OS1) aufgebracht wird, so bedeutet dies, dass das erste Fasermaterial (FM1) mit der gesamten ersten strukturierten Oberfläche (OS1) in Kontakt ist. Das erste Fasermaterial (FM1) bedeckt daher die gesamte erste strukturierte Oberfläche (OS1).

Das Aufbringen kann nach allen dem Fachmann bekannten Methoden erfolgen. Bevorzugt wird das erste Fasermaterial (FM1) in Schritt c) mit Hilfe eines Kalanders aufgebracht. Verfahren hierzu sind dem Fachmann bekannt. Der Kalander presst üblicherweise das erste Fasermaterial (FM1) auf die erste strukturierte Oberfläche (OS1) des ersten Schaumstoffkörpers (SK1).

"Ein Kalander" bedeutet im Rahmen der vorliegenden Erfindung sowohl genau ein Kalander als auch zwei oder mehrere Kalander.

Es ist möglich, dass vor dem Aufbringen des ersten Fasermaterials (FM1) auf die erste strukturierte Oberfläche (OS1) die erste strukturierte Oberfläche (OS1) beispielsweise erwärmt wird. Dabei kann die erste strukturierte Oberfläche (OS1) beispielsweise teilweise aufschmelzen und dann das erste Fasermaterial (FM1) aufgebracht werden. Beim Abkühlen der ersten strukturierten Oberfläche (OS1) verbindet sich dann die erste strukturierte Oberfläche (OS1) mit dem ersten Fasermaterial (FM1).

Es versteht sich von selbst, dass in dieser Ausführungsform des erfindungsgemäßen Verfahrens die erste strukturierte Oberfläche (OS1) nur so weit erwärmt wird, dass die Strukturierungen erhalten bleiben.

In dieser Ausführungsform erfolgt die Verbindung zwischen dem ersten Fasermaterial (FM1) und der ersten strukturierten Oberfläche (OS1) beispielsweise durch Verschweißen. Es ist ebenso möglich, dass die erste strukturierte Oberfläche (OS1) mit dem ersten Fasermaterial (FM1) dadurch mechanisch verbunden wird, beispielsweise indem die aufgeschmolzenen Bereiche der ersten strukturierten Oberfläche (OS1) in Poren (Löcher) des ersten Fasermaterials (FM1) eindringen und dadurch mit diesem verbunden werden unter Erhalt der ersten strukturierten Faseroberfläche (FO1).

Es ist darüber hinaus möglich, dass vor dem Aufbringen des ersten Fasermaterials (FM1) beispielsweise ein Klebstoff und/oder ein Lösungsmittel, welches die erste strukturierte Oberfläche (OS1) anlöst auf die erste strukturierte Oberfläche (OS1) aufgebracht wird, anschließend das erste Fasermaterial (FM1) aufgebracht wird und so die Verbindung zwischen dem ersten Fasermaterial (FM1) und der ersten strukturierten Oberfläche (OS1) erzeugt wird.

Es ist auch möglich, dass das erste Fasermaterial (FM1) wie vorstehend für die erste strukturierte Oberfläche (OS1) beschrieben vorbehandelt wird. Es ist also auch möglich, das erste Fasermaterial (FM1) zu erwärmen, sodass es sich mit der ersten strukturierten Oberfläche (OS1) beim Aufbringen verbindet, und/oder einen Klebstoff und/oder ein Lösungsmittel auf das erste Fasermaterial (FM1) aufzubringen, wodurch es sich beim Aufbringen auf die erste strukturierte Oberfläche (OS1) mit dieser verbindet unter Erhalt der ersten strukturierte Faseroberfläche (FO1).

Selbstverständlich sind auch Kombinationen aus den vorstehend beschriebenen Verfahren möglich.

In Schritt c) wird das Zwischenprodukt (ZP) mit der ersten strukturierten Faseroberfläche (FO1) erhalten. Die erste strukturierte Faseroberfläche (FO1) weist erfindungsgemäß dasselbe Profil wie die erste strukturierte Oberfläche (OS1) auf. Für das Profil (die Strukturierung) der ersten strukturierten Faseroberfläche (FO1) gelten daher die zuvor für die erste strukturierte Oberfläche (OS1) beschriebenen Ausführungen und Bevorzugungen entsprechend.

Es ist daher bevorzugt, dass das Profil der in Schritt c) erhaltenen ersten strukturierten Faseroberfläche (FO1) wellenförmig, zickzackförmig, karoförmig, rautenförmig, rechteckförmig, quadratförmig, punktförmig und/oder gitterförmig ist.

Es ist erfindungsgemäß außerdem bevorzugt, dass zumindest die Schritte a) und Schritt c) direkt nacheinander durchgeführt werden und/oder dass zumindest Schritt a) und Schritt c) kontinuierlich durchgeführt werden.

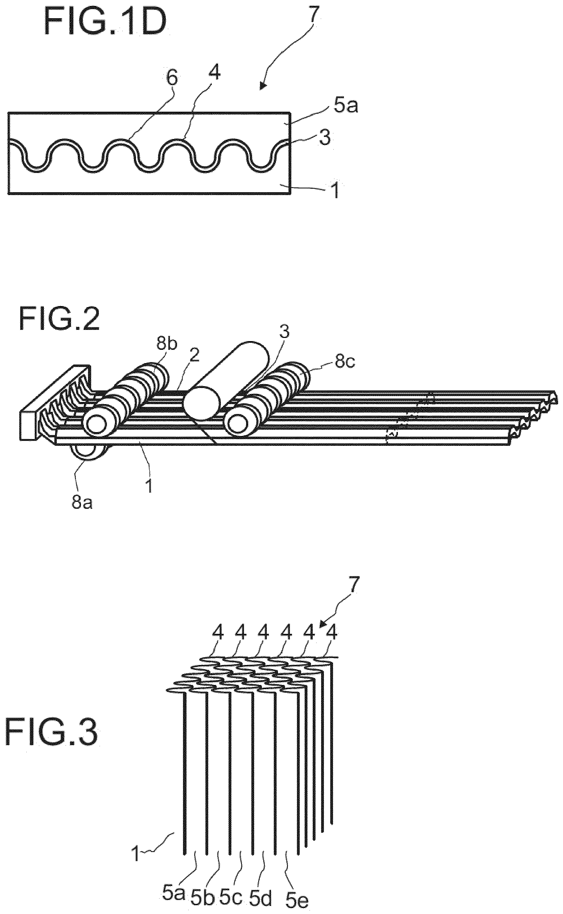

Diese Ausführungsform ist beispielsweise in Figur 2 gezeigt. Dabei wird der erste Schaumstoffkörper (SK1) mittels Extrusion erzeugt. Das erste Fasermaterial (FM1; 3) wird direkt nach der Extrusion des ersten Schaumstoffkörpers (SK1; 1), der eine erste strukturierte Oberfläche (OS1; 2) und eine dritte strukturierte Oberfläche (OS3) aufweist, auf den ersten Schaumstoffkörper (SK1; 1) aufgebracht. In der in Figur 2 dargestellten Ausführungsform wird das erste Fasermaterial (FM1; 3) in Extrusionsrichtung auf den ersten Schaumstoffkörper (SK1) aufgebracht. Zum Aufbringen des Fasermaterials wird ein Kalander 8c eingesetzt. Mit Hilfe des Kalanders 8b wird die erste strukturierte Oberfläche (OS1; 2) des ersten Schaumstoffkörpers (SK1; 1) zusätzlich geformt. Mit Hilfe des Kalanders 8a wird die dritte strukturierte Oberfläche (OS3) zusätzlich geformt. Es ist in dem in Figur 2 gezeigten Verfahren außerdem möglich, das erste Fasermaterial (FM1) senkrecht zur Extrusionsrichtung auf die erste strukturierte Oberfläche (OS1) des ersten Schaumstoffkörpers (SK1) aufzubringen.

In Schritt d) wird ein zweiter Schaumstoffkörper (SK2), der eine zweite strukturierte Oberfläche (OS2) aufweist, deren Profil zu dem Profil der ersten strukturierten Faseroberfläche (FO1) des Zwischenprodukts (ZP) invers ist, bereitgestellt.

Unter "ein zweiter Schaumstoffkörper (SK2)" wird im Rahmen der vorliegenden Erfindung sowohl genau ein zweiter Schaumstoffkörper (SK2) als auch zwei oder mehrere zweite Schaumstoffkörper (SK2) verstanden. Bevorzugt ist genau ein zweiter Schaumstoffkörper (SK2).

Unter "invers" wird vorliegend verstanden, dass das Profil der zweiten strukturierten Oberfläche (OS2) die Negativform des Profils der ersten strukturierten Faseroberfläche (FO1) ist. Dies bedeutet, dass jeweils ausgehend von dem zweiten Schaumstoffkörper (SK2) betrachtet die zweite strukturierte Oberfläche (OS2) an den Stellen Vertiefungen aufweist, an denen die erste strukturierte Faseroberfläche (FO1) Erhöhungen aufweist und umgekehrt.

Für den zweiten Schaumstoffkörper (SK2) gelten die zuvor für den ersten Schaumstoffkörper (SK1) beschriebenen Ausführungen und Bevorzugungen entsprechend. Dementsprechend gelten auch für die zweite strukturierte Oberfläche (OS2) die Ausführungen und Bevorzugungen für die erste strukturierte Oberfläche (OS1) entsprechend.

Es ist daher bevorzugt, dass der in Schritt d) bereitgestellte zweite Schaumstoffkörper (SK2) ein thermoplastisches Polymer enthält, vorzugsweise ein thermoplastisches Polymer ausgewählt aus der Gruppe bestehend aus thermoplastischen Elastomeren, thermoplastischen Elastomeren mit Copolymerstruktur, Polyetheramiden, Polyetherestern, Polyurethanen, Styrolpolymeren, Polyacrylaten, Polycarbonaten, Polyestern, Polyethern, Polyamiden, Polyethersulfonen, Polyetherketonen, Polyimiden, Polyvinylchloriden, Polyolefinen, Polyacrylnitrilen, Polyethersulfiden, deren Copolymere und Mischungen daraus.

Es ist darüber hinaus bevorzugt, dass der zweite Schaumstoffkörper (SK2) in Schritt d) bereitgestellt wird durch Extrusion, Thermoformung und/oder Drahtschneiden.

Es ist weiterhin bevorzugt, dass das Profil der zweiten strukturierten Oberfläche (OS2) in Schritt d) wellenförmig, zickzackförmig, karoförmig, rautenförmig, rechteckförmig, quadratförmig, punktförmig und/oder gitterförmig ist.

Darüber hinaus ist es bevorzugt, dass der zweite Schaumstoffkörper (SK2) die dritte strukturierte Oberfläche (OS3) aufweist, wobei die dritte strukturierte Oberfläche (OS3) gegenüber der zweiten strukturierten Oberfläche (OS2) angeordnet ist.

Ebenso ist es erfindungsgemäß bevorzugt, dass wenn der zweite Schaumstoffkörper (SK2) eine dritte strukturierte Oberfläche (OS3) aufweist, die zweite strukturierte Oberfläche (OS2) und die dritte strukturierte Oberfläche (OS3) im Wesentlichen parallel zueinander ausgerichtet sind.

Unter "im Wesentlichen parallel" wird im Rahmen der vorliegenden Erfindung verstanden, dass, wenn eine erste Ausgleichsebene durch die zweite strukturierte Oberfläche (OS2) und eine zweite Ausgleichsebene durch die dritte strukturierte Oberfläche (OS3) gelegt werden, diese beiden Ausgleichsebenen einen Winkel von maximal ± 45 °, bevorzugt von maximal ± 30 °, mehr bevorzugt von maximal ± 10 ° und am meisten bevorzugt von maximal ± 2 ° zueinander aufweisen.

In Schritt e) wird die zweite strukturierte Oberfläche (OS2) des zweiten Schaumstoffkörpers (SK2) auf zumindest einen Teil der ersten strukturierten Faseroberfläche (FO1) des Zwischenprodukts (ZP) aufgebracht unter Erhalt des Faser/Schaum-Verbundwerkstoffs (FSV1). In dem Faser/Schaum-Verbundwerkstoff (FSV1) sind die erste strukturierte Faseroberfläche (FO1) des Zwischenprodukts (ZP) und die zweite strukturierte Oberfläche (OS2) des zweiten Schaumstoffkörpers (SK2) miteinander verbunden.

Das Aufbringen der zweiten strukturierten Oberfläche (OS2) des zweiten Schaumstoffkörpers (SK2) auf zumindest einen Teil der ersten strukturierten Faseroberfläche (FO1) kann nach allen dem Fachmann bekannten Methoden erfolgen.

Bevorzugt wird die zweite strukturierte Oberfläche (OS2) des zweiten Schaumstoffkörpers (SK2) und/oder die erste strukturierte Faseroberfläche (FO1) des Zwischenprodukts (ZP) vor Schritt e) durch ein Heizelement erwärmt. Anschließend wird die zweite strukturierte Oberfläche (OS2) auf erste strukturierte Faseroberfläche (FO1) aufgebracht.

Beim Aufbringen kann zusätzlich ein Verpressen der zweiten strukturierten Oberfläche (OS2) mit der ersten strukturierten Faseroberfläche (FO1) erfolgen.

Durch das Erwärmen der zweiten strukturierten Oberfläche (OS2) und/oder der ersten strukturierten Oberfläche (FO1) mit einem Heizelement sind die zweite strukturierte Oberfläche (OS2) und die erste strukturierte Faseroberfläche (FO1) in dem Faser/Schaum-Verbundwerkstoff (FSV1) in Schritt e) durch eine Schweißnaht miteinander verbunden.

Es ist also bevorzugt, dass in dem erfindungsgemäßen Verfahren die zweite strukturierte Oberfläche (OS2) des zweiten Schaumstoffkörpers (SK2) und/oder die erste strukturierte Faseroberfläche (FO1) des Zwischenproduktes (ZP) vor Schritt e) durch ein Heizelement erwärmt werden und dadurch in dem in Schritt e) erhaltenen Faser/Schaum-Verbundwerkstoff (FSV1) durch eine Schweißnaht miteinander verbunden sind.

Geeignete Heizelemente sind dem Fachmann bekannt und beispielsweise Heizschwerter, Heizgitter und/oder Heizplatten.

Es ist erfindungsgemäß bevorzugt, dass, sofern die zweite strukturierte Oberfläche (OS2) des zweiten Schaumstoffkörpers (SK2) und/oder die erste strukturierte Faseroberfläche (FO1) des Zwischenprodukts (ZP) vor Schritt e) durch ein Heizelement erwärmt werden, das Erwärmen kontaktlos erfolgt, also so, dass das Heizelement die zweite strukturierte Oberfläche (OS2) und/oder die erste strukturierte Faseroberfläche (FO1) nicht berührt.

In einer weiteren Ausführungsform der vorliegenden Erfindung wird auf die zweite strukturierte Oberfläche (OS2) des zweiten Schaumstoffkörpers (SK2) und/oder auf die erste strukturierte Faseroberfläche (FO1) des Zwischenprodukts (ZP) vor Schritt e) ein Klebstoff und/oder ein Lösungsmittel aufgebracht. Anschließend wird die zweite strukturierte Oberfläche (OS2) des zweiten Schaumstoffkörpers (SK2) auf die erste strukturierte Faseroberfläche (FO1) des Zwischenprodukts (ZP) aufgebracht. Das Aufbringen kann gegebenenfalls auch unter Druck erfolgen. Durch das Aufbringen sind dann in dem in Schritt e) erhaltenen Faser/Schaum-Verbundwerkstoff (FSV1) die zweite strukturierte Oberfläche (OS2) des zweiten Schaumstoffkörpers (SK2) und die erste strukturierte Faseroberfläche (FO1) des Zwischenprodukts (ZP) durch den Klebstoff und/oder das Lösungsmittel miteinander verbunden.

Es ist im erfindungsgemäßen Verfahren also bevorzugt, dass auf die zweite strukturierte Oberfläche (OS2) des zweiten Schaumstoffkörpers (SK2) und/oder auf die erste strukturierte Faseroberfläche (FO1) des Zwischenproduktes (ZP) vor Schritt e) ein Klebstoff und/oder ein Lösungsmittel aufgebracht wird, und in dem in Schritt e) erhaltenen Faser/Schaum-Verbundwerkstoff (FSV1) die zweite strukturierte Oberfläche (OS2) des zweiten Schaumstoffkörpers (SK2) und die erste strukturierte Faseroberfläche (FO1) des Zwischenprodukts (ZP) durch den Klebstoff und/oder das Lösungsmittel miteinander verbunden sind.

Sind die zweite strukturierte Oberfläche (OS2) des zweiten Schaumstoffkörpers (SK2) und die erste strukturierte Faseroberfläche (FO1) des Zwischenprodukts (ZP) in dem in Schritt e) erhaltenen Faser/Schaum-Verbundwerkstoff (FSV1) durch den Klebstoff und/oder das Lösungsmittel miteinander verbunden, so wird dies auch als "Verbindung durch Verklebung" bezeichnet.

Es ist erfindungsgemäß also bevorzugt, dass in dem in Schritt e) erhaltenen Faser/Schaum-Verbundwerkstoff (FSV1) die zweite strukturierte Oberfläche (OS2) des zweiten Schaumstoffkörpers (SK2) mit zumindest einem Teil der ersten strukturierten Faseroberfläche (FO1) durch Verklebung oder Verschweißung miteinander verbunden ist.

Es ist im erfindungsgemäßen Verfahren außerdem bevorzugt, dass die erste strukturierte Faseroberfläche (FO1) aus Schritt c) die gleichen Abmessungen aufweist wie die zweite strukturierte Oberfläche (OS2) des zweiten Schaumstoffkörpers (SK2).

Die gleichen Abmessungen bedeutet im Rahmen der vorliegenden Erfindung. dass das Zwischenprodukt (ZP) die gleiche Breite und die gleiche Länge aufweist wie der zweite Schaumstoffkörper (SK2).

Es ist außerdem bevorzugt, dass die zweite strukturierte Oberfläche (OS2) des zweiten Schaumstoffkörpers (SK2) die erste strukturierte Faseroberfläche (FO1) nach Schritt e) vollständig bedeckt.

In einer bevorzugten Ausführungsform der vorliegenden Erfindung wird nach Schritt c) und vor Schritt e) auf die in Schritt c) erhaltene erste strukturierte Faseroberfläche (FO1) mindestens ein Harz aufgebracht.

Als das mindestens eine Harz eignen sich alle dem Fachmann bekannten Harze, bevorzugt ist ein reaktives duroplastisches oder thermoplastisches Harz, mehr bevorzugt ist das Harz auf Basis von Epoxiden, Acrylaten, Polyurethanen, Polyamiden, Polyestern, ungesättigten Polyestern, Vinylestern oder Mischungen daraus. Besonders bevorzugt ist das Harz ein aminisch härtendes Epoxidharz, ein latent härtendes Epoxidharz, ein anhydridisch härtendes Epoxidharz oder ein Polyurethan aus Isocyanaten und Polyolen. Derartige Harzsysteme sind dem Fachmann bekannt, beispielsweise aus Penczek et al., ,,"Advances in Polymer Science, 184, S. 1-95, 2005*",* Pham et al., "Ullmann's Encyclopedia of Industrial Chemistry, Vol. 13, 2012*",* Fahler, "Polyamide Kunststoffhandbuch 3/4, 1998*"* und Younes "WO 12 134 878*".*

Das mindestens eine Harz kann nach dem Aufbringen und vor Schritt e) ausgehärtet werden. Ebenso ist es möglich, dass das mindestens eine Harz erst ausgehärtet wird, nachdem die zweite strukturierte Oberfläche (OS2) des zweiten Schaumstoffkörpers (SK2) aufgebracht worden ist. Verfahren zum Aushärten des mindestens einen Harzes sind dem Fachmann bekannt.

In einer Ausführungsform des erfindungsgemäßen Verfahrens werden in Anschluss an Schritt e) die folgenden Schritte durchgeführt:
e-i) Mindestens einmaliges Schneiden des in Schritt e) erhaltenen Faser/Schaum-Verbundwerkstoffs (FSV1) in einem Winkel im Bereich 0° ≤ α ≤ 180°, bevorzugt in einem Winkel im Bereich von 45° ≤ α ≤ 130° und insbesondere bevorzugt in einem Winkel α = 90° zu der ersten Faseroberfläche (FO1) unter Erhalt eines ersten geschnittenen Faser/Schaum-Verbundwerkstoffs mit einer ersten geschnittenen Oberfläche (OG1) und eines zweiten geschnittenen Faser/Schaum-Verbundwerkstoffs mit einer zweiten geschnittenen Oberfläche (OG2),
e-ii) Bereitstellen eines dritten Fasermaterials (FM3),
e-iii) Aufbringen des dritten Fasermaterials (FM3) auf die erste geschnittene Oberfläche (OG1) des in Schritt e-i) erhaltenen ersten geschnittenen Faser/Schaum-Verbundwerkstoffs unter Erhalt einer dritten Faseroberfläche (FO3),
e-iv) Aufbringen der zweiten geschnittenen Oberfläche (OG2) des in Schritt e-i) erhaltenen zweiten geschnittenen Faser/Schaum-Verbundwerkstoffs auf die dritte Faseroberfläche (FO3) unter Erhalt eines Faser/Schaum-Verbundwerkstoffs (FSV4), in dem die zweite geschnittene Oberfläche (OG2) mit der dritten Faseroberfläche (FO3) verbunden ist.

Das mindestens einmalige Schneiden in Schritt e-i) kann nach allen dem Fachmann bekannten Methoden erfolgen. Das Schneiden kann so erfolgen, dass es sich um einen geraden Schnitt handelt, so dass eine planare erste geschnittene Oberfläche (OG1) und eine planare zweite geschnittene Oberfläche (OG2) erhalten werden. Darüber hinaus ist es möglich, dass das Schneiden so erfolgt, dass die erste geschnittene Oberfläche (OG1) und die zweite geschnittene Oberfläche (OG2) strukturiert sind. Es versteht sich von selbst, dass die erste geschnittene Oberfläche (OG1) in diesem Fall invers zu der zweiten geschnittenen Oberfläche (OG2) ist. Die erste geschnittene Oberfläche (OG1) ist daher dann das Negativ der zweiten geschnittenen Oberfläche (OG2).

Für das in Schritt e-ii) bereitgestellte dritte Fasermaterial (FM3) gelten die zuvor beschriebenen Ausführungen und Bevorzugungen für das in Schritt b) bereitgestellte erste Fasermaterial (FM1) entsprechend.

Es ist daher bevorzugt, dass
I) das in Schritt e-ii) bereitgestellte dritte Fasermaterial (FM3) ausgewählt ist aus der Gruppe bestehend aus anorganischen Mineralfasern, organischen Fasern, natürlichen Polymeren, natürlichen organischen Fasern pflanzlichen oder tierischen Ursprungs, Kohlenstofffasern und Mischungen daraus, vorzugsweise ausgewählt aus der Gruppe bestehend aus Glasfasern, Basaltfasern, Metallfasern, Keramikfasern, Nanotubefasern, Polykondensationsfasern, Polyadditionsfasern, zellulosebasierten Fasern, Gummifasern, stärkebasierten Fasern, glukosebasierten Fasern und Mischungen daraus und/oder
II) in Schritt e-ii) das dritte Fasermaterial (FM3) als Gewebe, Gelege, Geflecht, Vlies, Organosheet, Kardenband und/oder Roving bereitgestellt wird, und/oder
III) das in Schritt e-ii) bereitgestellte dritte Fasermaterial (FM3) eine Schlichte enthält, und/oder
IV) das in Schritt e-ii) bereitgestellte dritte Fasermaterial (FM3) ein Matrixmaterial, ein Bindemittel, thermoplastische Fasern, Pulver und/oder Partikel enthält.

Es ist außerdem bevorzugt, dass das in Schritt e-ii) bereitgestellte dritte Fasermaterial (FM3) trocken ist. Bevorzugt wird das dritte Fasermaterial (FM3) in Schritt e-ii) also trocken hergestellt.

"Trocken" bedeutet im Rahmen der vorliegenden Erfindung, dass das dritte Fasermaterial (FM3) nicht imprägniert ist. Insbesondere enthält das dritte Fasermaterial (FM3) dann keine Komponente, die ausgehärtet wird, wie beispielsweise ein Harz.

Bevorzugt wird in dieser Ausführungsform das dritte Fasermaterial (FM3) in Schritt e-iii) trocken auf die erste geschnittene Oberfläche (OG1) aufgebracht.

Für das Aufbringen des dritten Fasermaterials (FM3) auf die erste geschnittene Oberfläche (OG1) in Schritt e-iii) gelten die zuvor beschriebenen Ausführungen und Bevorzugungen für das Aufbringen des ersten Fasermaterials (FM1) auf die erste strukturierte Oberfläche (OS1) in Schritt c) des erfindungsgemäßen Verfahrens entsprechend.

Ebenso gelten für das Aufbringen der zweiten geschnittenen Oberfläche (OG2) auf die dritte Faseroberfläche (FO3) in Schritt e-iv) die zuvor beschriebenen Ausführungen und Bevorzugungen für das Aufbringen der zweiten strukturierten Oberfläche (OS2) auf die erste strukturierte Faseroberfläche (FO1) in Schritt e) entsprechend.

Der in Schritt e-iv) erhaltene Faser/Schaum-Verbundwerkstoff (FSV4) enthält durch das Schneiden das Fasermaterial in zumindest zwei verschiedenen Raumrichtungen. Es versteht sich von selbst, dass der so erhaltene Faser/Schaum-Verbundwerkstoff (FSV4) weiter verarbeitet werden kann, beispielsweise durch erneutes Schneiden und erneutes Aufbringen von mindestens einem Fasermaterial. Ebenso kann der erhaltene Faser/Schaum-Verbundwerkstoff (FSV4) als Faser/Schaum-Verbundwerkstoff (FSV1) im nachfolgend beschriebenen Schritt f) eingesetzt werden.

Darüber hinaus ist es möglich und erfindungsgemäß bevorzugt, im Anschluss an Schritt e) die folgenden Schritte durchzuführen:
f) Bereitstellen des in Schritt e) erhaltenen Faser/Schaum-Verbundwerkstoffs (FSV1), wobei der Faser/Schaum-Verbundwerkstoff (FSV1) eine dritte strukturierte Oberfläche (OS3) aufweist,
g) Bereitstellen eines zweiten Fasermaterials (FM2),
h) Aufbringen des zweiten Fasermaterials (FM2) auf zumindest einen Teil der dritten strukturierten Oberfläche (OS3) des Faser/Schaum-Verbundwerkstoffs (FSV1) unter Erhalt eines Faser/Schaum-Verbundwerkstoffs (FSV2) mit einer zweiten strukturierten Faseroberfläche (FO2), die dasselbe Profil wie die dritte strukturierte Oberfläche (OS3) des Faser/Schaum-Verbundwerkstoffs (FSV1) aufweist,
i) Bereitstellen eines dritten Schaumstoffkörpers (SK3), der eine vierte strukturierte Oberfläche (OS4) aufweist, deren Profil zu dem Profil der zweiten strukturierten Faseroberfläche (FO2) des Faser/Schaum-Verbundwerkstoffs (FSV2) invers ist und
j) Aufbringen der vierten strukturierten Oberfläche (OS4) des dritten Schaumstoffkörpers (SK3) auf zumindest einen Teil der zweiten strukturierten Faseroberfläche (FO2) unter Erhalt eines Faser/Schaum-Verbundwerkstoffs (FSV3), in dem die zweite strukturierte Faseroberfläche (FO2) des Faser/Schaum-Verbundwerkstoffs (FSV2) und die vierte strukturierte Oberfläche (OS4) des dritten Schaumstoffkörpers (SK3) miteinander verbunden sind.

In Schritt f) wird also der in Schritt e) erhaltene Faser/Schaum-Verbundwerkstoff (FSV1) bereitgestellt, wobei der Faser/Schaum-Verbundwerkstoff (FSV1) eine dritte strukturierte Oberfläche (OS3) aufweist.

Die dritte strukturierte Oberfläche (OS3) des Faser/Schaum-Verbundwerkstoffs (FSV1) ist bevorzugt bereits in dem ersten Schaumstoffkörper (SK1), der in Schritt a) bereitgestellt wird und/oder in dem zweiten Schaumstoffkörper (SK2), der in Schritt d) bereitgestellt wird, enthalten.

Ebenso ist es möglich, dass die dritte strukturierte Oberfläche (OS3) in den Faser/Schaum-Verbundwerkstoff (FSV1) erst im Anschluss an dessen Herstellung in Schritt e) aufgebracht wird und so der Faser/Schaum-Verbundwerkstoff (FSV1) in Schritt f) bereitgestellt wird. Verfahren hierzu sind dem Fachmann bekannt und beispielsweise Hobeln, Sägen, Fräsen und/oder Dratschneiden.

Für die dritte strukturierte Oberfläche (OS3) gelten die zuvor für die erste strukturierte Oberfläche (OS1) beschriebenen Ausführungen und Bevorzugungen entsprechend.

Es ist daher bevorzugt, dass das Profil der dritten strukturierten Oberfläche (OS3) in Schritt f) wellenförmig, zickzackförmig, karoförmig, rautenförmig rechteckförmig, quadratförmig, punktförmig und/oder gitterförmig ist.

Für das in Schritt g) bereitgestellte zweite Fasermaterial (FM2) gelten die zuvor beschriebenen Ausführungen und Bevorzugungen für das erste Fasermaterial (FM1) entsprechend.

Im erfindungsgemäßen Verfahren ist daher bevorzugt, dass
I) das in Schritt g) bereitgestellte zweite Fasermaterial (FM2) ausgewählt ist aus der Gruppe bestehend aus anorganischen Mineralfasern, organischen Fasern, organischen Polymeren, natürlichen organischen Fasern pflanzlichen oder tierischen Ursprungs, Kohlenstofffasern und Mischungen daraus, vorzugsweise ausgewählt aus der Gruppe bestehend aus Glasfasern, Basaltfasern, Metallfasern, Keramikfasern, Nanotubefasern, Polykondensationsfasern, Polyadditionsfasern, zellulosebasierten Fasern, Gummifasern, stärkebasierten Fasern, glukosebasierten Fasern und Mischungen daraus, und/oder
II) in Schritt g) das zweite Fasermaterial (FM2) als Gewebe, Gelege, Geflecht, Vlies, Organosheet, Kardenband und/oder Roving bereitgestellt wird, und/oder
III) das in Schritt g) bereitgestellte zweite Fasermaterial (FM2) eine Schlichte enthält, und/oder
IV) das in Schritt b) bereitgestellte zweite Fasermaterial (FM2) eine Matrixmaterial, ein Bindemittel, thermoplastische Fasern, Pulver und/oder Partikel enthält.

Es ist außerdem bevorzugt, dass das in Schritt g) bereitgestellte zweite Fasermaterial (FM2) trocken ist. Bevorzugt wird das zweite Fasermaterial (FM2) in Schritt g) also trocken bereitgestellt.

"Trocken" bedeutet im Rahmen der vorliegenden Erfindung, dass das zweite Fasermaterial (FM2) nicht imprägniert ist. Insbesondere enthält das zweite Fasermaterial (FM2) dann keine Komponente, die ausgehärtet wird, wie beispielsweise ein Harz.

Bevorzugt wird in dieser Ausführungsform das zweite Fasermaterial (FM2) in Schritt h) trocken auf zumindest einen Teil der dritten strukturierten Oberfläche (OS3) aufgebracht.

Für das Aufbringen des zweiten Fasermaterials (FM2) auf zumindest einen Teil der dritten strukturierten Oberfläche (OS3) in Schritt h) gelten die zuvor beschriebenen Ausführungen und Bevorzugungen für das Aufbringen des ersten Fasermaterials (FM1) auf zumindest einen Teil der ersten strukturierten Oberfläche (OS1) in Schritt d) entsprechend.

Es ist daher bevorzugt, dass das zweite Fasermaterial (FM2) in Schritt h) auf die gesamte dritte strukturierte Oberfläche (OS3) des Faser/Schaum-Verbundwerkstoffs (FSV1) aufgebracht wird.

Es ist außerdem bevorzugt, dass das zweite Fasermaterial (FM2) in Schritt h) mit Hilfe eines Kalanders aufgebracht wird.

Des Weiteren ist es im erfindungsgemäßen Verfahren bevorzugt, dass das zweite Fasermaterial (FM2) in Schritt h) auf eine dritte strukturierte Oberfläche (OS3) des Faser/Schaum-Verbundwerkstoffs (FSV1) aufgebracht wird, wobei die dritte strukturierte Oberfläche (OS3) im Wesentlichen parallel zu der ersten strukturierten Faseroberfläche (FO1) des Zwischenproduktes (ZP) aus Schritt c) ausgerichtet ist.

Unter "im Wesentlichen parallel" wird im Rahmen der vorliegenden Erfindung verstanden, dass, wenn eine erste Ausgleichsebene durch die dritte strukturierte Oberfläche (OS3) und eine zweite Ausgleichsebene durch die erste strukturierte Faseroberfläche (FO1) gelegt werden, diese beiden Ausgleichsebenen einen Winkel von maximal ± 45 °, bevorzugt von maximal ± 30 °, mehr bevorzugt von maximal ± 10 ° und am meisten bevorzugt von maximal ± 2 ° zueinander aufweisen.

Für den in Schritt i) bereitgestellten dritten Schaumstoffkörper (SK3) gelten die zuvor für den in Schritt d) bereitgestellten zweiten Schaumstoffkörper (SK2) beschriebenen Ausführungen und Bevorzugungen entsprechend.

"Ein dritter Schaumstoffkörper (SK3)" bedeutet im Rahmen der vorliegenden Erfindung sowohl genau ein dritter Schaumstoffkörper (SK3) als auch zwei oder mehrere dritte Schaumstoffkörper (SK3), wobei genau ein dritter Schaumstoffkörper (SK3) bevorzugt ist.

Es ist daher im erfindungsgemäßen Verfahren bevorzugt, dass der dritte Schaumstoffkörper (SK3) in Schritt i) bereitgestellt wird durch Extrusion, Thermoformung und/oder Drahtschneiden.

Es ist weiterhin bevorzugt im erfindungsgemäßen Verfahren, dass der in Schritt i) bereitgestellte dritte Schaumstoffkörper (SK3) ein thermoplastisches Polymer enthält, vorzugsweise ein thermoplastisches Polymer, ausgewählt aus der Gruppe bestehend aus thermoplastischen Elastomeren, thermoplastischen Elastomeren mit Copolymerstruktur, Polyetheramiden, Polyetherestern, Polyurethanen, Styrolpolymeren, Polyacrylaten, Polycarbonaten, Polyestern, Polyethern, Polyamiden, Polyethersulfonen, Polyetherketonen, Polyimiden, Polyvinylchloriden, Polyolefinen, Polyacrylnitrilen, Polyethersulfiden, deren Copolymere und Mischungen daraus.

Es ist bevorzugt, dass das Profil der vierten strukturierten Oberfläche (OS4) in Schritt i) wellenförmig, zickzackförmig, karoförmig, rautenförmig, rechteckförmig, quadratförmig, punktförmig und/oder gitterförmig ist.

Es ist außerdem bevorzugt, dass die vierte strukturierte Oberfläche (OS4) des dritten Schaumstoffkörpers (SK3) die gleichen Abmessungen aufweist wie die zweite strukturierte Faseroberfläche (FO2) aus Schritt h).

Für das Aufbringen der vierten strukturierten Oberfläche (OS4) des dritten Schaumstoffkörpers (SK3) auf die zweite strukturierte Faseroberfläche (FO2) in Schritt j) gelten die zuvor beschriebenen Ausführungen und Bevorzugungen für das Aufbringen der zweiten strukturierten Oberfläche (OS2) des zweiten Schaumstoffkörpers (SK2) auf die erste strukturierte Faseroberfläche (FO1) in Schritt e) entsprechend.

Es ist daher bevorzugt, dass die vierte strukturierte Oberfläche (OS4) des dritten Schaumstoffkörpers (SK3) und/oder die zweite strukturierte Faseroberfläche (FO2) des Faser/Schaum-Verbundwerkstoffs (FSV2) vor Schritt j) durch ein Heizelement erwärmt werden und dadurch in dem in Schritt j) erhaltenen Faser/Schaum-Verbundwerkstoff (FSV3) durch eine Schweißnaht miteinander verbunden sind.

Es ist weiterhin bevorzugt, dass auf die vierte strukturierte Oberfläche (OS4) des dritten Schaumstoffkörpers (SK3) und/oder auf die zweite strukturierte Faseroberfläche (FO2) des Faser/Schaum-Verbundwerkstoffs (FSV2) vor Schritt j) ein Klebstoff und/oder ein Lösungsmittel aufgebracht wird und in dem in Schritt j) erhaltenen Faser/Schaum-Verbundwerkstoff (FSV3) die vierte strukturierte Oberfläche (OS4) des dritten Schaumstoffkörpers (SK3) und die zweite strukturierte Faseroberfläche (FO2) des Faser/Schaum-Verbundwerkstoffs (FSV2) durch den Klebstoff und/oder das Lösungsmittel miteinander verbunden sind.

Daher ist es erfindungsgemäß bevorzugt, dass in dem in Schritt j) erhaltenen Faser/Schaum-Verbundwerkstoff (FSV3) die vierte strukturierte Oberfläche (OS4) des dritten Schaumstoffkörpers (SK3) mit zumindest einem Teil der zweiten strukturierten Faseroberfläche (FO2) durch Verklebung und/oder durch Verschweißung verbunden ist.

Weiterhin bevorzugt bedeckt die vierte strukturierte Oberfläche (OS4) des dritten Schaumstoffkörpers (SK3) die zweite strukturierte Faseroberfläche (FO2) nach Schritt j) vollständig.
Es ist bevorzugt, dass nach Schritt h) und vor Schritt j) auf die in Schritt h) erhaltene zweite strukturierte Faseroberfläche (FO2) mindestens ein Harz aufgebracht wird.

Als das mindestens eine Harz eignen sich alle dem Fachmann bekannten Harze, bevorzugt ist ein reaktives duroplastisches oder thermoplastisches Harz, mehr bevorzugt ist das Harz auf Basis von Epoxiden, Acrylaten, Polyurethanen, Polyamiden, Polyestern, ungesättigten Polyestern, Vinylestern oder Mischungen daraus. Besonders bevorzugt ist das Harz ein aminisch härtendes Epoxidharz, ein latent härtendes Epoxidharz, ein anhydridisch härtendes Epoxidharz oder ein Polyurethan aus Isocyanaten und Polyolen. Derartige Harzsysteme sind dem Fachmann bekannt, beispielsweise aus Penczek et al., ,,"Advances in Polymer Science, 184, S. 1-95, 2005*",* Pham et al., "Ullmann's Encyclopedia of Industrial Chemistry, Vol. 13, 2012*",* Fahler, "Polyamide Kunststoffhandbuch 3/4, 1998" und Younes "WO 12 134 878*".*

Das mindestens eine Harz kann nach Aufbringen und vor Schritt j) ausgehärtet werden. Ebenso ist es möglich, dass das mindestens eine Harz erst ausgehärtet wird, nachdem die vierte strukturierte Oberfläche (OS4) des dritten Schaumstoffkörpers (SK3) aufgebracht worden ist. Verfahren zum Aushärten des mindestens einen Harzes sind dem Fachmann bekannt.

Es ist möglich, dass der in Schritt j) erhaltene Faser/Schaum-Verbundwerkstoff (FSV3) in Schritt f) rückgeführt wird. Es versteht sich von selbst, dass dann anstelle des Faser/Schaum-Verbundwerkstoffs (FSV1) dort der Faser/Schaum-Verbundwerkstoff (FSV3) eingesetzt wird. Die Schritte f) bis j) können dann mindestens einmal wiederholt werden.

Es ist im erfindungsgemäßen Verfahren also bevorzugt, dass der in Schritt j) erhaltene Faser/Schaum-Verbundwerkstoff (FSV3) in den Schritt f) rückgeführt und dort als Faser/Schaum-Verbundwerkstoff (FSV1) eingesetzt wird, worauf die Schritte f) bis j) mindestens einmal wiederholt werden.

Es ist außerdem bevorzugt, dass im erfindungsgemäßen Verfahren im Anschluss an Schritt j) die folgenden Schritte durchgeführt werden:
j-i) Mindestens einmaliges Schneiden des in Schritt j) erhaltenen Faser/Schaum-Verbundwerkstoffs (FSV3) in einem Winkel im Bereich von 0° ≤ α ≤ 180° zu der ersten Faseroberfläche (FO1) unter Erhalt eines ersten geschnittenen Faser/Schaum-Verbundwerkstoffs mit einer ersten geschnittenen Oberfläche (OG1) und eines zweiten geschnittenen Faser/Schaum-Verbundwerkstoffs mit einer zweiten geschnittenen Oberfläche (OG2),
j-ii) Bereitstellen eines dritten Fasermaterials (FM3),
j-iii) Aufbringen des dritten Fasermaterials (FM3) auf die erste geschnittene Oberfläche (OG1) des ersten geschnittenen Faser/Schaum-Verbundwerkstoffs unter Erhalt einer dritten Faseroberfläche (FO3),
j-iv) Aufbringen der zweiten geschnittenen Oberfläche (OG2) des zweiten geschnittenen Faser/Schaum-Verbundwerkstoffs auf die dritte Faseroberfläche (FO3) unter Erhalt eines Faser/Schaum-Verbundwerkstoffs (FSV4), in dem die zweite geschnittene Oberfläche (OG2) mit der dritten Faseroberfläche (FO3) verbunden ist.

Für die Schritte j-i) bis j-iv) gelten die zuvor für die Schritte e-i) bis e-iv) beschriebenen Ausführungen und Bevorzugungen entsprechend.

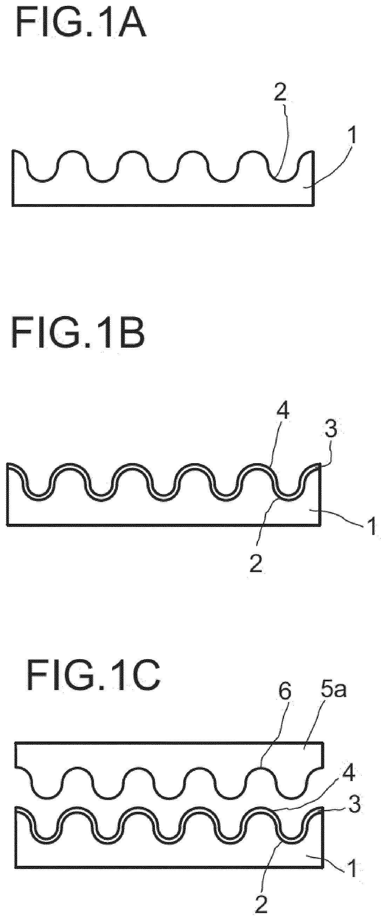

Die Figuren 1A bis 1D zeigen beispielhaft eine Ausführungsform des Verfahrens zur Herstellung des Faser/Schaum-Verbundwerkstoffs (FSV1). In den Figuren 1A bis 1D haben gleiche Bezugszeichen jeweils dieselbe Bedeutung.

Figur 1A zeigt den ersten Schaumstoffkörper (SK1; 1) der eine erste strukturierte Oberfläche (OS1; 2) aufweist. Auf diesen wird ein erstes Fasermaterial (FM1; 3) aufgebracht unter Erhalt der ersten strukturierten Faseroberfläche (FO1; 4), die dasselbe Profil wie die erste strukturierte Oberfläche (OS1; 2) aufweist (Figur 1B). In Figur 1C wird der zweite Schaumstoffkörper (SK2; 5a) bereitgestellt. Dieser weist eine zweite strukturierte Oberfläche (OS2; 6) auf, deren Profil zu dem Profil der ersten strukturierten Faseroberfläche (FO1; 4) invers ist. Unter "invers" wird vorliegend verstanden, dass das Profil der zweiten strukturierten Oberfläche (OS2; 6) die Negativform des Profils der ersten strukturierten Faseroberfläche (FO1; 4) ist. Dies bedeutet, dass jeweils ausgehend von den entsprechenden Schaumstoffkörpern betrachtet die zweite strukturierte Oberfläche (OS2; 6) an den Stellen Vertiefungen aufweist, an denen die erste strukturierte Faseroberfläche (FO1; 4) Erhöhungen aufweist und umgekehrt.

Die Figur 1D zeigt den Faser/Schaum-Verbundwerkstoff (FSV1; 7), in dem die erste strukturierte Faseroberfläche (FO1; 4) und die zweite strukturierte Oberfläche (OS2; 6) miteinander verbunden sind.

Figur 3 zeigt einen beispielhaften Faser/Schaum-Verbundwerkstoff (FSV3; 7), der aus einem ersten Schaumstoffkörper (SK1; 1) und fünf weiteren Schaumstoffkörpern (SK2; SK3; 5a; 5b; 5c; 5d; 5e) sowie mehreren Fasermaterialien 4 hergestellt worden ist. Zur Herstellung des Faser/Schaum-Verbundwerkstoffs (FSV3) wurde zunächst ein Faser/Schaum-Verbundwerkstoff (FSV1) aus einem ersten Schaumstoffkörper (SK1; 1), einem ersten Fasermaterial (FM1; 4) und einem zweiten Schaumstoffkörper (SK2; 5a) nach dem erfindungsgemäßen Verfahren hergestellt. Anschließend wurde ein zweites Fasermaterial (FM2; 4) auf die dritte strukturierte Oberfläche (OS3) des Faser/Schaum-Verbundwerkstoffs (FSV1) aufgebracht, wobei die dritte strukturierte Oberfläche (OS3) im Wesentlichen Parallel zu der ersten strukturierten Faseroberfläche (FO1) liegt. Schließlich wurde der dritte Schaumstoffkörper (SK3; 5a) aufgebracht. Diese Schritte wurden viermal wiederholt.

## Patentansprüche

1. Verfahren zur Herstellung eines Faser/Schaum-Verbundwerkstoffs (FSV1), umfassend die folgenden Schritte:
a) Bereitstellen eines ersten Schaumstoffkörpers (SK1), der eine erste strukturierte Oberfläche (OS1) aufweist,
b) Bereitstellen eines ersten Fasermaterials (FM1),
c) Aufbringen des ersten Fasermaterials (FM1) auf zumindest einen Teil der ersten strukturierten Oberfläche (OS1) des ersten Schaumstoffkörpers (SK1), unter Erhalt eines Zwischenproduktes (ZP) mit einer ersten strukturierten Faseroberfläche (F01), die dasselbe Profil wie die erste strukturierte Oberfläche (OS1) aufweist,
d) Bereitstellen eines zweiten Schaumstoffkörpers (SK2), der eine zweite strukturierte Oberfläche (OS2) aufweist, deren Profil zu dem Profil der ersten strukturierten Faseroberfläche (FO1) des Zwischenproduktes (ZP) invers ist und
e) Aufbringen der zweiten strukturierten Oberfläche (OS2) des zweiten Schaumstoffkörpers (SK2) auf zumindest einen Teil der ersten strukturierten Faseroberfläche (FO1) des Zwischenproduktes (ZP) unter Erhalt des Faser/Schaum-Verbundwerkstoffs (FSV1), in dem die erste strukturierte Faseroberfläche (FO1) des Zwischenproduktes (ZP) und die zweite strukturierte Oberfläche (OS2) des zweiten Schaumstoffkörpers (SK2) miteinander verbunden sind.

2. Verfahren gemäß Anspruch 1, **dadurch gekennzeichnet, dass** im Anschluss an Schritt e) die folgenden Schritte durchgeführt werden:
f) Bereitstellen des in Schritt e) erhaltenen Faser/Schaum-Verbundwerkstoff (FSV1), wobei der Faser/Schaum-Verbundwerkstoff (FSV1) eine dritte strukturierte Oberfläche (OS3) aufweist,
g) Bereitstellen eines zweiten Fasermaterials (FM2),
h) Aufbringen des zweiten Fasermaterials (FM2) auf zumindest einen Teil der dritten strukturierten Oberfläche (OS3) des Faser/Schaum-Verbundwerkstoffs (FSV1), unter Erhalt eines Faser/Schaum-Verbundwerkstoffs (FSV2) mit einer zweiten strukturierten Faseroberfläche (FO2), die dasselbe Profil wie die dritte strukturierte Oberfläche (OS3) des Faser/Schaum-Verbundwerkstoffs (FSV1) aufweist,
i) Bereitstellen eines dritten Schaumstoffkörpers (SK3), der eine vierte strukturierte Oberfläche (OS4) aufweist, deren Profil zu dem Profil der zweiten strukturierten Faseroberfläche (FO2) des Faser/Schaum-Verbundwerkstoffs (FSV2) invers ist und
j) Aufbringen der vierten strukturierten Oberfläche (OS4) des dritten Schaumstoffkörpers (SK3) auf zumindest einen Teil der zweiten strukturierten Faseroberfläche (FO2), unter Erhalt eines Faser/Schaum-Verbundwerkstoffs (FSV3), in dem die zweite strukturierte Faseroberfläche (FO2) des Faser/Schaum-Verbundwerkstoffs (FSV2) und die vierte strukturierte Oberfläche (OS4) des dritten Schaumstoffkörpers (SK3) miteinander verbunden sind.

3. Verfahren gemäß Anspruch 2, **dadurch gekennzeichnet, dass**
I) der in Schritt j) erhaltene Faser/Schaum-Verbundwerkstoff (FSV3) in den Schritt f) rückgeführt und dort als Faser/Schaum-Verbundwerkstoff (FSV1) eingesetzt wird, worauf die Schritte f) bisj) mindestens einmal wiederholt werden, und/oder
II) das zweite Fasermaterial (FM2) in Schritt h) auf eine dritte strukturierte Oberfläche (OS3) des Faser/Schaum-Verbundwerkstoffs (FSV1) aufgebracht wird, wobei die dritte strukturierte Oberfläche (OS3) im Wesentlichen parallel zur ersten strukturierten Faseroberfläche (FO1) des Zwischenproduktes (ZP) aus Schritt c) ausgerichtet ist, und/oder
III) der erste Schaumstoffkörper (SK1) die dritte strukturierte Oberfläche (OS3) aufweist, wobei die dritte strukturierte Oberfläche (OS3) gegenüber der ersten strukturierten Oberfläche (OS1) angeordnet ist, und/oder
IV) der zweite Schaumstoffkörper (SK2) die dritte strukturierte Oberfläche (OS3) aufweist, wobei die dritte strukturierte Oberfläche (OS3) gegenüber der zweiten strukturierten Oberfläche (OS2) angeordnet ist.

4. Verfahren gemäß einem der Ansprüche 1 bis 3, **dadurch gekennzeichnet, dass**
I) das erste Fasermaterial (FM1) in Schritt c) auf die gesamte erste strukturierte Oberfläche (OS1) des ersten Schaumstoffkörpers (SK1) aufgebracht wird, und/oder
II) das zweite Fasermaterial (FM2) in Schritt h) auf die gesamte dritte strukturierte Oberfläche (OS3) des Faser/Schaum-Verbundwerkstoffs (FSV1) aufgebracht wird.

5. Verfahren gemäß einem der Ansprüche 1 bis 4, **dadurch gekennzeichnet, dass**
I) die erste strukturierte Faseroberfläche (FO1) aus Schritt c) die gleichen Abmessungen aufweist wie die zweite strukturierte Oberfläche (OS2) des zweiten Schaumstoffkörpers (SK2), und/oder
II) die zweite strukturierte Oberfläche (OS2) des zweiten Schaumstoffkörpers (SK2) die erste strukturierte Faseroberfläche (FO1) nach Schritt e) vollständig bedeckt, und/oder
III) die vierte strukturierte Oberfläche (OS4) des dritten Schaumstoffkörpers (SK3) die gleichen Abmessungen aufweist wie die zweite strukturierte Faseroberfläche (FO2) aus Schritt h), und/oder
IV) die vierte strukturierte Oberfläche (OS4) des dritten Schaumstoffkörpers (SK3) die zweite strukturierte Faseroberfläche (FO2) nach Schritt j) vollständig bedeckt.

6. Verfahren gemäß einem der Ansprüche 1 bis 5, **dadurch gekennzeichnet, dass**
I) das erste Fasermaterial (FM1) in Schritt c) mit Hilfe eines Kalanders aufgebracht wird, und/oder
II) das zweite Fasermaterial (FM2) in Schritt h) mit Hilfe eines Kalanders aufgebracht wird.

7. Verfahren gemäß einem der Ansprüche 1 bis 6, **dadurch gekennzeichnet, dass**
I) zumindest Schritt a) und Schritt c) direkt nacheinander durchgeführt werden, und/oder
II) zumindest Schritt a) und Schritt c) kontinuierlich durchgeführt werden.

8. Verfahren gemäß einem der Ansprüche 1 bis 7, **dadurch gekennzeichnet, dass**
I) in dem in Schritt e) erhaltenen Faser/Schaum-Verbundwerkstoff (FSV1) die zweite strukturierte Oberfläche (OS2) des zweiten Schaumstoffkörpers (SK2) mit zumindest einem Teil der ersten strukturierten Faseroberfläche (FO1) durch Verklebung und/oder Verschweißung verbunden ist, und/oder
II) in dem in Schritt j) erhaltenen Faser/Schaum-Verbundwerkstoff (FSV3) die vierte strukturierte Oberfläche (OS4) des dritten Schaumstoffkörpers (SK3) mit zumindest einem Teil der zweiten strukturierten Faseroberfläche (FO2) durch Verklebung und/oder Verschweißung verbunden ist, und/oder
III) die zweite strukturierte Oberfläche (OS2) des zweiten Schaumstoffkörpers (SK2) und/oder die erste strukturierte Faseroberfläche (FO1) des Zwischenproduktes (ZP) vor Schritt e) durch ein Heizelement erwärmt werden und dadurch in dem in Schritt e) erhaltenen Faser/Schaum-Verbundwerkstoff (FSV1) durch eine Schweißnaht miteinander verbunden sind, und/oder
IV) die vierte strukturierte Oberfläche (OS4) des dritten Schaumstoffkörpers (SK3) und/oder die zweite strukturierte Faseroberfläche (FO2) des Faser/Schaum-Verbundwerkstoffs (FSV2) vor Schritt j) durch ein Heizelement erwärmt werden und dadurch in dem in Schritt j) erhaltenen Faser/Schaum-Verbundwerkstoff (FSV3) durch eine Schweißnaht miteinander verbunden sind, und/oder
V) auf die zweite strukturierte Oberfläche (OS2) des zweiten Schaumstoffkörpers (SK2) und/oder auf die erste strukturierte Faseroberfläche (FO1) des Zwischenproduktes (ZP) vor Schritt e) ein Klebstoff und/oder ein Lösungsmittel aufgebracht wird und in dem in Schritt e) erhaltenen Faser/Schaum-Verbundwerkstoff (FSV1) die zweite strukturierte Oberfläche (OS2) des zweiten Schaumstoffkörpers (SK2) und die erste strukturierte Faseroberfläche (FO1) des Zwischenproduktes (ZP) durch den Klebstoff und/oder das Lösungsmittel miteinander verbunden sind, und/oder
VI) auf die vierte strukturierte Oberfläche (OS4) des dritten Schaumstoffkörpers (SK3) und/oder auf die zweite strukturierte Faseroberfläche (FO2) des Faser/Schaum-Verbundwerkstoffs (FSV2) vor Schritt j) ein Klebstoff und/oder ein Lösungsmittel aufgebracht wird und in dem in Schritt j) erhaltenen Faser/Schaum-Verbundwerkstoff (FSV3) die vierte strukturierte Oberfläche (OS4) des dritten Schaumstoffkörpers (SK3) und die zweite strukturierte Faseroberfläche (FO2) des Faser/Schaum-Verbundwerkstoffs (FSV3) durch den Klebstoff und/oder das Lösungsmittel miteinander verbunden sind.

9. Verfahren gemäß einem der Ansprüche 1 bis 8, **dadurch gekennzeichnet, dass**
I) der erste Schaumstoffkörper (SK1) in Schritt a) bereitgestellt wird durch Extrusion, Thermoformung und/oder Drahtschneiden, und/oder
II) der zweite Schaumstoffkörper (SK2) in Schritt d) bereitgestellt wird durch Extrusion, Thermoformung und/oder Drahtschneiden, und/oder
III) der dritte Schaumstoffkörper (SK3) in Schritt i) bereitgestellt wird durch Extrusion, Thermoformung und/oder Drahtschneiden.

10. Verfahren gemäß einem der Ansprüche 1 bis 9, **dadurch gekennzeichnet, dass**
I) das Profil der ersten strukturierten Oberfläche (OS1) in Schritt a) wellenförmig, zickzackförmig, karoförmig, rautenförmig, rechteckförmig, quadratförmig, punktförmig und/oder gitterförmig ist, und/oder
II) das Profil der zweiten strukturierten Oberfläche (OS2) in Schritt d) wellenförmig, zickzackförmig, karoförmig, rautenförmig, rechteckförmig, quadratförmig, punktförmig und/oder gitterförmig ist, und/oder
III) das Profil der dritten strukturierten Oberfläche (OS3) in Schritt f) wellenförmig, zickzackförmig, karoförmig, rautenförmig, rechteckförmig, quadratförmig, punktförmig und/oder gitterförmig ist, und/oder
IV) das Profil der vierten strukturierten Oberfläche (OS4) in Schritt i) wellenförmig, zickzackförmig, karoförmig, rautenförmig, rechteckförmig, quadratförmig, punktförmig und/oder gitterförmig ist.

11. Verfahren gemäß einem der Ansprüche 1 bis 10, **dadurch gekennzeichnet, dass**
I) das in Schritt b) bereitgestellte erste Fasermaterial (FM1) ausgewählt ist aus der Gruppe bestehend aus anorganischen Mineralfasern, organischen Fasern, natürlichen Polymeren, natürlichen organischen Fasern pflanzlichen oder tierischen Ursprungs, Kohlenstofffasern und Mischungen daraus, vorzugsweise ausgewählt aus der Gruppe bestehend aus Glasfasern, Basaltfasern, Metallfasern, Keramikfasern, Nanotubefasern, Polykondensationsfasern, Polyadditionsfasern, zellulosebasierten Fasern, Gummifasern, stärkebasierten Fasern, glukosebasierten Fasern und Mischungen daraus und/oder
II) in Schritt b) das erste Fasermaterial (FM1) als Gewebe, Gelege, Geflecht, Vlies, Organosheet, Kardenband und/oder Roving bereitgestellt wird, und/oder
III) das in Schritt b) bereitgestellte erste Fasermaterial (FM1) eine Schlichte enthält und/oder
IV) das in Schritt b) bereitgestellte erste Fasermaterial (FM1) ein Matrixmaterial, ein Bindemittel, thermoplastische Fasern, Pulver und/oder Partikel enthält.

12. Verfahren gemäß einem der Ansprüche 1 bis 11, **dadurch gekennzeichnet, dass**
I) das in Schritt g) bereitgestellte zweite Fasermaterial (FM2) ausgewählt ist aus der Gruppe bestehend aus anorganischen Mineralfasern, organischen Fasern, natürlichen Polymeren, natürlichen organischen Fasern pflanzlichen oder tierischen Ursprungs, Kohlenstofffasern und Mischungen daraus, vorzugsweise ausgewählt aus der Gruppe bestehend aus Glasfasern, Basaltfasern, Metallfasern, Keramikfasern, Nanotubefasern, Polykondensationsfasern, Polyadditionsfasern, zellulosebasierten Fasern, Gummifasern, stärkebasierten Fasern, glukosebasierten Fasern und Mischungen daraus, und/oder
II) in Schritt g) das zweite Fasermaterial (FM2) als Gewebe, Gelege, Geflecht, Vlies, Organosheet, Kardenband und/oder Roving bereitgestellt wird, und/oder
III) das in Schritt g) bereitgestellte zweite Fasermaterial (FM2) eine Schlichte enthält, und/oder
IV) das in Schritt g) bereitgestellte zweite Fasermaterial (FM2) ein Matrixmaterial, ein Bindemittel, thermoplastische Fasern, Pulver und/oder Partikel enthält.

13. Verfahren gemäß einem der Ansprüche 1 bis 12, **dadurch gekennzeichnet, dass**
I) der in Schritt a) bereitgestellte erste Schaumstoffkörper (SK1) ein thermoplastisches Polymer enthält, vorzugsweise ein thermoplastisches Polymer, ausgewählt aus der Gruppe bestehend aus thermoplastischen Elastomeren, thermoplastischen Elastomeren mit Copolymerstruktur, Polyetheramiden, Polyetherestern, Polyurethanen, Styrolpolymeren, Polyacrylaten, Polycarbonaten, Polyestern, Polyethern, Polyamiden, Polyethersulfonen, Polyetherketonen, Polyimiden, Polyvinylchloriden, Polyolefinen, Polyacrylnitrilen, Polyethersulfiden, deren Copolymere und Mischungen daraus, und/oder
II) der in Schritt d) bereitgestellte zweite Schaumstoffkörper (SK2) ein thermoplastisches Polymer enthält, vorzugsweise ein thermoplastisches Polymer, ausgewählt aus der Gruppe bestehend aus thermoplastischen Elastomeren, thermoplastischen Elastomeren mit Copolymerstruktur, Polyetheramiden, Polyetherestern, Polyurethanen, Styrolpolymeren, Polyacrylaten, Polycarbonaten, Polyestern, Polyethern, Polyamiden, Polyethersulfonen, Polyetherketonen, Polyimiden, Polyvinylchloriden, Polyolefinen, Polyacrylnitrilen, Polyethersulfiden, deren Copolymere und Mischungen daraus, und/oder
III) der in Schritt i) bereitgestellte dritte Schaumstoffkörper (SK3) ein thermoplastisches Polymer enthält, vorzugsweise ein thermoplastisches Polymer, ausgewählt aus der Gruppe bestehend aus thermoplastischen Elastomeren, thermoplastischen Elastomeren mit Copolymerstruktur, Polyetheramiden, Polyetherestern, Polyurethanen, Styrolpolymeren, Polyacrylaten, Polycarbonaten, Polyestern, Polyethern, Polyamiden, Polyethersulfonen, Polyetherketonen, Polyimiden, Polyvinylchloriden, Polyolefinen, Polyacrylnitrilen, Polyethersulfiden, deren Copolymere und Mischungen daraus.

14. Verfahren gemäß einem der Ansprüche 1 bis 13, wobei im Anschluss an Schritt e) die folgenden Schritte durchgeführt werden:
e-i) mindestens einmaliges Schneiden des in Schritt e) erhaltenen Faser/Schaum-Verbundwerkstoffs (FSV1) einem Winkel im Bereich von 0° < α < 180° zu der ersten Faseroberfläche (FO1) unter Erhalt eines ersten geschnittenen Faser/Schaum-Verbundwerkstoffs mit einer ersten geschnittenen Oberfläche (OG1) und eines zweiten geschnittenen Faser/Schaum-Verbundwerkstoffs mit einer zweiten geschnittenen Oberfläche (OG2),
e-ii) Bereitstellen eines dritten Fasermaterials (FM3),
e-iii) Aufbringen des dritten Fasermaterials (FM3) auf die erste geschnittene Oberfläche (OG1) des in Schritt e-i) erhaltenen ersten geschnittenen Faser/Schaum-Verbundwerkstoffs, unter Erhalt einer dritten Faseroberfläche (FO3),
e-iv) Aufbringen der zweiten geschnittenen Oberfläche (OG2) des in Schritt ei) erhaltenen zweiten geschnittenen Faser/Schaum-Verbundwerkstoffs auf die dritte Faseroberfläche (FO3) unter Erhalt eines Faser/Schaum-Verbundwerkstoffs (FSV4), in dem die zweite geschnittene Oberfläche (OG2) mit der dritten Faseroberfläche (FO3) verbunden ist.

15. Verfahren gemäß einem der Ansprüche 1 bis 13, wobei im Anschluss an Schritt j) die folgenden Schritte durchgeführt werden:
j-i) mindestens einmaliges Schneiden des in Schritt j) erhaltenen Faser/Schaum-Verbundwerkstoffs (FSV3) in einem Winkel im Bereich von 0° < α < 180° zu der ersten Faseroberfläche (FO1) unter Erhalt eines ersten geschnittenen Faser/Schaum-Verbundwerkstoffs mit einer ersten geschnittenen Oberfläche (OG1) und eines zweiten geschnittenen Faser/Schaum-Verbundwerkstoffs mit einer zweiten geschnittenen Oberfläche (OG2),
j-ii) Bereitstellen eines dritten Fasermaterials (FM3),
j-iii) Aufbringen des dritten Fasermaterials (FM3) auf die erste geschnittene Oberfläche (OG1) des ersten geschnittenen Faser/Schaum-Verbundwerkstoffs, unter Erhalt einer dritten Faseroberfläche (FO3),
j-iv) Aufbringen der zweiten geschnittenen Oberfläche (OG2) des zweiten geschnittenen Faser/Schaum-Verbundwerkstoffs auf die dritte Faseroberfläche (FO3) unter Erhalt eines Faser/Schaum-Verbundwerkstoffs (FSV4), in dem die zweite geschnittene Oberfläche (OG2) mit der dritten Faseroberfläche (FO3) verbunden ist.

## Claims

1. A process for producing a fiber-foam composite (FSV1), which comprises the following steps:
a) provision of a first foam body (SK1) which has a first structured surface (OS1),
b) provision of a first fiber material (FM1),
c) application of the first fiber material (FM1) to at least part of the first structured surface (OS1) of the first foam body (SK1) to give an intermediate (ZP) having a first structured fiber surface (F01) which has the same profile as the first structured surface (OS1),
d) provision of a second foam body (SK2) which has a second structured surface (OS2) whose profile is inverse to the profile of the first structured fiber surface (F01) of the intermediate (ZP) and
e) application of the second structured surface (OS2) of the second foam body (SK2) to at least part of the first structured fiber surface (FO1) of the intermediate (ZP) to give the fiber-foam composite (FSV1) in which the first structured fiber surface (F01) of the intermediate (ZP) and the second structured surface (OS2) of the second foam body (SK2) are joined to one another.

2. The process according to claim 1, wherein the following steps are carried out after step e):
f) provision of the fiber-foam composite (FSV1) obtained in step e), where the fiber-foam composite (FSV1) has a third structured surface (OS3),
g) provision of a second fiber material (FM2),
h) application of the second fiber material (FM2) to at least part of the third structured surface (OS3) of the fiber-foam composite (FSV1) to give a fiber-foam composite (FSV2) having a second structured fiber surface (FO2) which has the same profile as the third structured surface (OS3) of the fiber-foam composite (FSV1),
i) provision of a third foam body (SK3) which has a fourth structured surface (OS4) whose profile is inverse to the profile of the second structured fiber surface (FO2) of the fiber-foam composite (FSV2) and
j) application of the fourth structured surface (OS4) of the third foam body (SK3) to at least part of the second structured fiber surface (FO2) to give a fiber-foam composite (FSV3) in which the second structured fiber surface (FO2) of the fiber-foam composite (FSV2) and the fourth structured surface (OS4) of the third foam body (SK3) are joined to one another.

3. The process according to claim 2, wherein
I) the fiber-foam composite (FSV3) obtained in step j) is recirculated to step f) and used there as fiber-foam composite (FSV1), whereupon the steps f) to j) are repeated at least once, and/or
II) the second fiber material (FM2) is applied to a third structured surface (OS3) of the fiber-foam composite (FSV1) in step h), with the third structured surface (OS3) being oriented essentially parallel to the first structured fiber surface (F01) of the intermediate (ZP) from step c), and/or
III) the first foam body (SK1) has the third structured surface (OS3), with the third structured surface (OS3) being arranged opposite the first structured surface (OS1), and/or
IV) the second foam body (SK2) has the third structured surface (OS3), with the third structured surface (OS3) being arranged opposite the second structured surface (OS2).

4. The process according to any of claims 1 to 3, wherein
I) the first fiber material (FM1) is applied to the entire first structured surface (OS1) of the first foam body (SK1) in step c), and/or
II) the second fiber material (FM2) is applied to the entire third structured surface (OS3) of the fiber-foam composite (FSV1) in step h).

5. The process according to any of claims 1 to 4, wherein
I) the first structured fiber surface (F01) from step c) has the same dimensions as the second structured surface (OS2) of the second foam body (SK2), and/or
II) the second structured surface (OS2) of the second foam body (SK2) completely covers the first structured fiber surface (F01) after step e), and/or
III) the fourth structured surface (OS4) of the third foam body (SK3) has the same dimensions as the second structured fiber surface (FO2) from step h), and/or
IV) the fourth structured surface (OS4) of the third foam body (SK3) completely covers the second structured fiber surface (FO2) after step j).

6. The process according to any of claims 1 to 5, wherein
I) the first fiber material (FM1) is applied by means of a calender in step c), and/or
II) the second fiber material (FM2) is applied by means of a calender in step h).

7. The process according to any of claims 1 to 6, wherein
I) at least step a) and step c) are carried out in direct succession, and/or
II) at least step a) and step c) are carried out continuously.

8. The process according to any of claims 1 to 7, wherein
I) the second structured surface (OS2) of the second foam body (SK2) is joined to at least part of the first structured fiber surface (F01) by adhesive bonding and/or welding in the fiber-foam composite (FSV1) obtained in step e), and/or
II) the fourth structured surface (OS4) of the third foam body (SK3) is joined to at least part of the second structured fiber surface (FO2) by adhesive bonding and/or welding in the fiber-foam composite (FSV3) obtained in step j), and/or
III) the second structured surface (OS2) of the second foam body (SK2) and/or the first structured fiber surface (F01) of the intermediate (ZP) are heated by means of a heating element before step e) and are thereby joined to one another by a welding seam in the fiber-foam composite (FSV1) obtained in step e), and/or
IV) the fourth structured surface (OS4) of the third foam body (SK3) and/or the second structured fiber surface (FO2) of the fiber-foam composite (FSV2) are heated by means of a heating element before step j) and thereby joined to one another by a welding seam in the fiber-foam composite (FSV3) obtained in step j), and/or
V) an adhesive and/or a solvent is applied to the second structured surface (OS2) of the second foam body (SK2) and/or to the first structured fiber surface (F01) of the intermediate (ZP) before step e) and the second structured surface (OS2) of the second foam body (SK2) and the first structured fiber surface (F01) of the intermediate (ZP) are joined to one another by means of the adhesive and/or the solvent in the fiber-foam composite (FSV1) obtained in step e), and/or
VI) an adhesive and/or a solvent is applied to the fourth structured surface (OS4) of the third foam body (SK3) and/or to the second structured fiber surface (FO2) of the fiber-foam composite (FSV2) before step j) and the fourth structured surface (OS4) of the third foam body (SK3) and the second structured fiber surface (FO2) of the fiber-foam composite (FSV3) are joined to one another by means of the adhesive and/or the solvent in the fiber-foam composite (FSV3) obtained in step j).

9. The process according to any of claims 1 to 8, wherein
I) the first foam body (SK1) is provided in step a) by extrusion, thermoforming and/or wire cutting, and/or
II) the second foam body (SK2) is provided in step d) by extrusion, thermoforming and/or wire cutting, and/or
III) the third foam body (SK3) is provided in step i) by extrusion, thermoforming and/or wire cutting.

10. The process according to any of claims 1 to 9, wherein
I) the profile of the first structured surface (OS1) in step a) is wave-shaped, zig-zag-shaped, diamond-shaped, lozenge-shaped, rectangular, square, point-like and/or grid-like, and/or
II) the profile of the second structured surface (OS2) in step d) is wave-shaped, zig-zag-shaped, diamond-shaped, lozenge-shaped, rectangular, square, point-like and/or grid-like, and/or
III) the profile of the third structured surface (OS3) in step f) is wave-shaped, zig-zag-shaped, diamond-shaped, lozenge-shaped, rectangular, square, point-like and/or grid-like, and/or
IV) the profile of the fourth structured surface (OS4) in step i) is wave-shaped, zig-zag-shaped, diamond-shaped, lozenge-shaped, rectangular, square, point-like and/or grid-like.

11. The process according to any of claims 1 to 10, wherein
I) the first fiber material (FM1) provided in step b) is selected from the group consisting of inorganic mineral fibers, organic fibers, natural polymers, natural organic fibers of vegetable or animal origin, carbon fibers and mixtures thereof, preferably selected from the group consisting of glass fibers, basalt fibers, metal fibers, ceramic fibers, nanotube fibers, polycondensation fibers, polyaddition fibers, cellulose-based fibers, rubber fibers, starch-based fibers, glucose-based fibers and mixtures thereof, and/or
II) the first fiber material (FM1) is provided in step b) as woven fabric, lay-up, braid, nonwoven, organosheet, carded band and/or roving, and/or
III) the first fiber material (FM1) provided in step b) comprises a size, and/or
IV) the first fiber material (FM1) provided in step b) comprises a matrix material, a binder, thermoplastic fibers, powders and/or particles.

12. The process according to any of claims 1 to 11, wherein
I) the second fiber material (FM2) provided in step g) is selected from the group consisting of inorganic mineral fibers, organic fibers, natural polymers, natural organic fibers of vegetable or animal origin, carbon fibers and mixtures thereof, preferably selected from the group consisting of glass fibers, basalt fibers, metal fibers, ceramic fibers, nanotube fibers, polycondensation fibers, polyaddition fibers, cellulose-based fibers, rubber fibers, starch-based fibers, glucose-based fibers and mixtures thereof, and/or
II) the second fiber material (FM2) is provided in step g) as woven fabric, lay-up, braid, nonwoven, organosheet, carded band and/or roving, and/or
III) the second fiber material (FM2) provided in step g) comprises a size, and/or
IV) the second fiber material (FM2) provided in step g) comprises a matrix material, a binder, thermoplastic fibers, powders and/or particles.

13. The process according to any of claims 1 to 12, wherein
I) the first foam body (SK1) provided in step a) comprises a thermoplastic polymer, preferably a thermoplastic polymer selected from the group consisting of thermoplastic elastomers, thermoplastic elastomers having a copolymer structure, polyetheramides, polyether esters, polyurethanes, styrene polymers, polyacrylates, polycarbonates, polyesters, polyethers, polyamides, polyether sulfones, polyether ketones, polyimides, polyvinyl chlorides, polyolefins, polyacrylonitriles, polyether sulfides, copolymers and mixtures thereof, and/or
II) the second foam body (SK2) provided in step d) comprises a thermoplastic polymer, preferably a thermoplastic polymer selected from the group consisting of thermoplastic elastomers, thermoplastic elastomers having a copolymer structure, polyetheramides, polyether esters, polyurethanes, styrene polymers, polyacrylates, polycarbonates, polyesters, polyethers, polyamides, polyether sulfones, polyether ketones, polyimides, polyvinyl chlorides, polyolefins, polyacrylonitriles, polyether sulfides, copolymers and mixtures thereof, and/or
III) the third foam body (SK3) provided in step i) comprises a thermoplastic polymer, preferably a thermoplastic polymer selected from the group consisting of thermoplastic elastomers, thermoplastic elastomers having a copolymer structure, polyetheramides, polyether esters, polyurethanes, styrene polymers, polyacrylates, polycarbonates, polyesters, polyethers, polyamides, polyether sulfones, polyether ketones, polyimides, polyvinyl chlorides, polyolefins, polyacrylonitriles, polyether sulfides, copolymers and mixtures thereof.

14. The process according to any of claims 1 to 13, wherein the following steps are carried out after step e):
e-i) cutting of the fiber-foam composite (FSV1) obtained in step e) at least once at an angle in the range 0° < α < 180° to the first fiber surface (F01) to give a first cut fiber-foam composite having a first cut surface (OG1) and a second cut fiber-foam composite having a second cut surface (OG2),
e-ii) provision of a third fiber material (FM3),
e-iii) application of the third fiber material (FM3) to the first cut surface (OG1) of the first cut fiber-foam composite obtained in step e-i) to give a third fiber surface (FO3),
e-iv) application of the second cut surface (OG2) of the second cut fiber-foam composite obtained in step e-i) to the third fiber surface (FO3) to give a fiber-foam composite (FSV4) in which the second cut surface (OG2) is joined to the third fiber surface (FO3).

15. The process according to any of claims 1 to 13, wherein the following steps are carried out after step j):
j-i) cutting of the fiber-foam composite (FSV3) obtained in step j) at least once at an angle in the range 0° < α < 180° to the first fiber surface (F01) to give a first cut fiber-foam composite having a first cut surface (OG1) and a second cut fiber-foam composite having a second cut surface (OG2),
j-ii) provision of a third fiber material (FM3),
j-iii) application of the third fiber material (FM3) to the first cut surface (OG1) of the first cut fiber-foam composite to give a third fiber surface (FO3),
j-iv) application of the second cut surface (OG2) of the second cut fiber-foam composite to the third fiber surface (FO3) to give a fiber-foam composite (FSV4) in which the second cut surface (OG2) is joined to the third fiber surface (FO3).

## Revendications

1. Procédé pour la préparation d'un matériau composite fibres-mousse (FSV1), comprenant les étapes suivantes :
a) mise à disposition d'un premier corps de mousse (SK1) qui présente une première surface structurée (OS1),
b) mise à disposition d'un premier matériau fibreux (FM1),
c) dépôt du premier matériau fibreux (FM1) sur au moins une partie de la première surface structurée (OS1) du premier corps de mousse (SK1), avec obtention d'un produit intermédiaire (ZP) doté d'une première surface structurée de fibres (F01), qui présente le même profil que la première surface structurée (OS1),
d) mise à disposition d'un deuxième corps de mousse (SK2), qui présente une deuxième surface structurée (OS2) dont le profil est l'inverse du profil de la première surface structurée de fibres (FO1) du produit intermédiaire (ZP) et
e) dépôt de la deuxième surface structurée (OS2) du deuxième corps de mousse (SK2) sur au moins une partie de la première surface structurée de fibres (FO1) du produit intermédiaire (ZP) avec obtention du matériau composite fibres/mousse (FSV1), dans lequel la première surface structurée de fibres (FO1) du produit intermédiaire (ZP) et la deuxième surface structurée (OS2) du deuxième corps de mousse (SK2) sont reliées l'une à l'autre.

2. Procédé selon la revendication 1, **caractérisé en ce qu'**à la suite de l'étape
e) les étapes suivantes sont mises en œuvre :
f) mise à disposition du matériau composite fibres/mousse (FSV1) obtenu dans l'étape e), le matériau composite fibres/mousse (FSV1) présentant une troisième surface structurée (OS3),
g) mise à disposition d'un deuxième matériau fibreux (FM2),
h) dépôt du deuxième matériau fibreux (FM2) sur au moins une partie de la troisième surface structurée (OS3) du matériau composite fibres/mousse (FSV1), avec obtention d'un matériau composite fibres/mousse (FSV2) doté d'une deuxième surface structurée de fibres (FO2) qui présente le même profil que la troisième surface structurée (OS3) du matériau composite fibres/mousse (FSV1),
i) mise à disposition d'un troisième corps de mousse (SK3) qui présente une quatrième surface structurée (OS4) dont le profil est l'inverse du profil de la deuxième surface structurée de fibres (FO2) du matériau composite fibres/mousse (FSV2) et
j) dépôt de la quatrième surface structurée (OS4) du troisième corps de mousse (SK3) sur au moins une partie de la deuxième surface structurée de fibres (FO2), avec obtention d'un matériau composite fibres/mousse (FSV3) dans lequel la deuxième surface structurée de fibres (FO2) du matériau composite fibres/mousse (FSV2) et la quatrième surface structurée (OS4) du troisième corps de mousse (SK3) sont reliées l'une à l'autre.

3. Procédé selon la revendication 2, **caractérisé en ce que**
I) le matériau composite fibres/mousse (FSV3) obtenu dans l'étape j) est renvoyé à l'étape f) et y est utilisé en tant que matériau composite fibres/mousse (FSV1), les étapes f) à j) étant répétées au moins une fois, et/ou
II) le deuxième matériau fibreux (FM2) dans l'étape h) est déposé sur une troisième surface structurée (OS3) du matériau composite fibres/mousse (FSV1), la troisième surface structurée (OS3) étant dirigée essentiellement de manière parallèle à la première surface structurée de fibres (FO1) du produit intermédiaire (ZP) de l'étape c), et/ou
III) le premier corps de mousse (SK1) présente la troisième surface structurée (OS3), la troisième surface structurée (OS3) étant disposée à l'opposé de la première surface structurée (OS1), et/ou
IV) le deuxième corps de mousse (SK2) présente la troisième surface structurée (OS3), la troisième surface structurée (OS3) étant disposée à l'opposé de la deuxième surface structurée (OS2).

4. Procédé selon l'une quelconque des revendications 1 à 3, **caractérisé en ce que**
I) le premier matériau fibreux (FM1) dans l'étape c) est déposé sur la première surface structurée (OS1) totale du premier corps de mousse (SK1), et/ou
II) le deuxième matériau fibreux(FM2) dans l'étape h) est déposé sur la troisième surface structurée (OS3) totale du matériau composite fibres/mousse (FSV1).

5. Procédé selon l'une quelconque des revendications 1 à 4, **caractérisé en ce que**
I) la première surface structurée de fibres (FO1) de l'étape c) présente les mêmes dimensions que la deuxième surface structurée (OS2) du deuxième corps de mousse (SK2), et/ou
II) la deuxième surface structurée (OS2) du deuxième corps de mousse (SK2) recouvre totalement la première surface structurée de fibres (FO1) après l'étape e), et/ou
III) la quatrième surface structurée (OS4) du troisième corps de mousse (SK3) présente les mêmes dimensions que la deuxième surface structurée de fibres (FO2) de l'étape h), et/ou
IV) la quatrième surface structurée (OS4) du troisième corps de mousse (SK3) recouvre totalement la deuxième surface structurée de fibres (FO2) après l'étape j).

6. Procédé selon l'une quelconque des revendications 1 à 5, **caractérisé en ce que**
I) le premier matériau fibreux (FM1) dans l'étape c) est déposé à l'aide d'une calandre, et/ou
II) le deuxième matériau fibreux (FM2) dans l'étape h) est déposé à l'aide d'une calandre.

7. Procédé selon l'une quelconque des revendications 1 à 6, **caractérisé en ce que**
I) au moins l'étape a) et l'étape c) sont mises en œuvre directement l'une après l'autre, et/ou
II) au moins l'étape a) et l'étape c) sont mises en œuvre de manière continue.

8. Procédé selon l'une quelconque des revendications 1 à 7, **caractérisé en ce que**
I) dans le matériau composite fibres/mousse (FSV1) obtenu dans l'étape e), la deuxième surface structurée (OS2) du deuxième corps de mousse (SK2) est reliée avec au moins une partie de la première surface structurée de fibres (FO1) par collage et/ou par soudage, et/ou
II) dans le matériau composite fibres/mousse (FSV3) obtenu dans l'étape j), la quatrième surface structurée (OS4) du troisième corps de mousse (SK3) est reliée avec au moins une partie de la deuxième surface structurée de fibres (FO2) par collage et/ou par soudage, et/ou
III) la deuxième surface structurée (OS2) du deuxième corps de mousse (SK2) et/ou la première surface structurée de fibres (FO1) du produit intermédiaire (ZP) sont chauffées par un élément de chauffe avant l'étape e) et par conséquent sont reliées l'une à l'autre dans le matériau composite fibres/mousse (FSV1) obtenu dans l'étape e) par une ligne de soudage, et/ou
IV) la quatrième surface structurée (OS4) du troisième corps de mousse (SK3) et/ou la deuxième surface structurée de fibres (FO2) du matériau composite fibres/mousse (FSV2) sont chauffées par un élément de chauffe avant l'étape j) et par conséquent sont reliées l'une à l'autre dans le matériau composite fibres/mousse (FSV3) obtenu dans l'étape j) par une ligne de soudage, et/ou
V) un adhésif et/ou un solvant est déposé sur la deuxième surface structurée (OS2) du deuxième corps de mousse (SK2) et/ou sur la première surface structurée de fibres (FO1) du produit intermédiaire (ZP) avant l'étape e) et la deuxième surface structurée (OS2) du deuxième corps de mousse (SK2) et la première surface structurée de fibres (FO1) du produit intermédiaire (ZP) dans le matériau composite fibres/mousse (FSV1) obtenu dans l'étape e) sont reliées l'une à l'autre par l'adhésif et/ou le solvant, et/ou
VI) un adhésif et/ou un solvant est déposé sur la quatrième surface structurée (OS4) du troisième corps de mousse (SK3) et/ou sur la deuxième surface structurée de fibres (FO2) du matériau composite fibres/mousse (FSV2) avant l'étape j) et la quatrième surface structurée (OS4) du troisième corps de mousse (SK3) et la deuxième surface structurée de fibres (FO2) du matériau composite fibres/mousse (FSV3) dans le matériau composite fibres/mousse (FSV3) obtenu dans l'étape j) sont reliées l'une à l'autre par l'adhésif et/ou le solvant.

9. Procédé selon l'une quelconque des revendications 1 à 8, **caractérisé en ce que**
I) le premier corps de mousse (SK1) dans l'étape a) est mis à disposition par extrusion, thermoformage et/ou découpage à fil, et/ou
II) le deuxième corps de mousse (SK2) dans l'étape d) est mis à disposition par extrusion, thermoformage et/ou découpage à fil, et/ou
III) le troisième corps de mousse (SK3) dans l'étape i) est mis à disposition par extrusion, thermoformage et/ou découpage à fil.

10. Procédé selon l'une quelconque des revendications 1 à 9, **caractérisé en ce que**
I) le profil de la première surface structurée (OS1) dans l'étape a) est ondulé, en zigzag, en forme de carreau, en forme de losange, rectangulaire, en forme de carré, en forme de points et/ou en forme de grille, et/ou
II) le profil de la deuxième surface structurée (OS2) dans l'étape d) est ondulé, en zigzag, en forme de carreau, en forme de losange, rectangulaire, en forme de carré, en forme de points et/ou en forme de grille, et/ou
III) le profil de la troisième surface structurée (OS3) dans l'étape f) est ondulé, en zigzag, en forme de carreau, en forme de losange, rectangulaire, en forme de carré, en forme de points et/ou en forme de grille, et/ou
IV) le profil de la quatrième surface structurée (OS4) dans l'étape i) est ondulé, en zigzag, en forme de carreau, en forme de losange, rectangulaire, en forme de carré, en forme de points et/ou en forme de grille.

11. Procédé selon l'une quelconque des revendications 1 à 10, **caractérisé en ce que**
I) le premier matériau fibreux (FM1) mis à disposition dans l'étape b) est choisi dans le groupe constitué par des fibres minérales inorganiques, des fibres organiques, des polymères naturels, des fibres organiques naturelles d'origine végétale ou animale, des fibres de carbone et des mélanges correspondants, de préférence choisi dans le groupe constitué par les fibres de verre, les fibres de basalte, les fibres de métal, les fibres de céramique, les fibres de nanotubes, les fibres de polycondensation, les fibres de polyaddition, les fibres à base de cellulose, les fibres de caoutchouc, les fibres à base d'amidon, les fibres à base de glucose et des mélanges correspondants et/ou
II) le premier matériau fibreux (FM1) dans l'étape b) est mis à disposition en tant que tissu, canevas, treillis, nappe, tôle organique, ruban de carde et/ou mèche, et/ou
III) le premier matériau fibreux (FM1) mis à disposition dans l'étape b) contient un enduit et/ou
IV) le premier matériau fibreux (FM1) mis à disposition dans l'étape b) contient un matériau de matrice, un liant, des fibres thermoplastiques, de la poudre et/ou des particules.

12. Procédé selon l'une quelconque des revendications 1 à 11, **caractérisé en ce que**
I) le deuxième matériau fibreux (FM2) mis à disposition dans l'étape g) est choisi dans le groupe constitué par des fibres minérales inorganiques, des fibres organiques, des polymères naturels, des fibres organiques naturelles d'origine végétale ou animale, des fibres de carbone et des mélanges correspondants, de préférence choisi dans le groupe constitué par les fibres de verre, les fibres de basalte, les fibres de métal, les fibres de céramique, les fibres de nanotubes, les fibres de polycondensation, les fibres de polyaddition, les fibres à base de cellulose, les fibres de caoutchouc, les fibres à base d'amidon, les fibres à base de glucose et des mélanges correspondants et/ou
II) le deuxième matériau fibreux (FM2) dans l'étape g) est mis à disposition en tant que tissu, canevas, treillis, nappe, tôle organique, ruban de carde et/ou mèche, et/ou
III) le deuxième matériau fibreux (FM2) mis à disposition dans l'étape g) contient un enduit et/ou
IV) le deuxième matériau fibreux (FM2) mis à disposition dans l'étape g) contient un matériau de matrice, un liant, des fibres thermoplastiques, de la poudre et/ou des particules.

13. Procédé selon l'une quelconque des revendications 1 à 12, **caractérisé en ce que**
I) le premier corps de mousse (SK1) mis à disposition dans l'étape a) contient un polymère thermoplastique, de préférence un polymère thermoplastique choisi dans le groupe constitué par des élastomères thermoplastiques, des élastomères thermoplastiques comportant une structure de copolymère, des polyétheramides, des polyétheresters, des polyuréthanes, des polymères de styrène, des polyacrylates, des polycarbonates, des polyesters, des polyéthers, des polyamides, des polyéthersulfones, des polyéthercétones, des polyimides, des poly(chlorure de vinyle), des polyoléfines, des polyacrylonitriles, des polyéthersulfures, leurs copolymères et des mélanges correspondants, et/ou
II) le deuxième corps de mousse (SK2) mis à disposition dans l'étape d) contient un polymère thermoplastique, de préférence un polymère thermoplastique choisi dans le groupe constitué par des élastomères thermoplastiques, des élastomères thermoplastiques comportant une structure de copolymère, des polyétheramides, des polyétheresters, des polyuréthanes, des polymères de styrène, des polyacrylates, des polycarbonates, des polyesters, des polyéthers, des polyamides, des polyéthersulfones, des polyéthercétones, des polyimides, des poly(chlorure de vinyle), des polyoléfines, des polyacrylonitriles, des polyéthersulfures, leurs copolymères et des mélanges correspondants, et/ou
III) le troisième corps de mousse (SK3) mis à disposition dans l'étape i) contient un polymère thermoplastique, de préférence un polymère thermoplastique choisi dans le groupe constitué par des élastomères thermoplastiques, des élastomères thermoplastiques comportant une structure de copolymère, des polyétheramides, des polyétheresters, des polyuréthanes, des polymères de styrène, des polyacrylates, des polycarbonates, des polyesters, des polyéthers, des polyamides, des polyéthersulfones, des polyéthercétones, des polyimides, des poly(chlorure de vinyle), des polyoléfines, des polyacrylonitriles, des polyéthersulfures, leurs copolymères et des mélanges correspondants.

14. Procédé selon l'une quelconque des revendications 1 à 13, dans lequel à la suite de l'étape e) les étapes suivantes sont mises en œuvre :
e-i) découpage au moins une fois du matériau composite fibres/mousse (FSV1) obtenu dans l'étape e) suivant un angle dans la plage de 0° < α < 180° par rapport à la première surface de fibres (FO1) avec obtention d'un premier matériau composite fibres/mousse découpé doté d'une première surface découpée (OG1) et d'un deuxième matériau composite fibres/mousse découpé doté d'une deuxième surface découpée (OG2),
e-ii) mise à disposition d'un troisième matériau fibreux (FM3),
e-iii) dépôt du troisième matériau fibreux (FM3) sur la première surface découpée (OG1) du premier matériau composite fibres/mousse découpé obtenu dans l'étape e-i), avec obtention d'une troisième surface de fibres (FO3),
e-iv) dépôt de la deuxième surface découpée (OG2) du deuxième matériau composite fibres/mousse découpé obtenu dans l'étape e-i) sur la troisième surface de fibres (FO3) avec obtention d'un matériau composite fibres/mousse (FSV4) dans lequel la deuxième surface découpée (OG2) est reliée à la troisième surface de fibres (FO3).

15. Procédé selon l'une quelconque des revendications 1 à 13, dans lequel à la suite de l'étape j) les étapes suivantes sont mises en œuvre :
j-i) découpage au moins une fois du matériau composite fibres/mousse (FSV3) obtenu dans l'étape j) suivant un angle dans la plage de 0° < α < 180° par rapport à la première surface de fibres (FO1) avec obtention d'un premier matériau composite fibres/mousse découpé doté d'une première surface découpée (OG1) et d'un deuxième matériau composite fibres/mousse découpé doté d'une deuxième surface découpée (OG2),
j-ii) mise à disposition d'un troisième matériau fibreux (FM3),
j-iii) dépôt du troisième matériau fibreux (FM3) sur la première surface découpée (OG1) du premier matériau composite fibres/mousse découpé, avec obtention d'une troisième surface de fibres (FO3),
j-iv) dépôt de la deuxième surface découpée (OG2) du deuxième matériau composite fibres/mousse découpé sur la troisième surface de fibres (FO3) avec obtention d'un matériau composite fibres/mousse (FSV4) dans lequel la deuxième surface découpée (OG2) est reliée à la troisième surface de fibres (FO3).
